# EUROPÄISCHE PATENTSCHRIFT

(11) **EP 3 603 752 B1**
(45) Veröffentlichungstag und Bekanntmachung des Hinweises auf die Patenterteilung: **15.11.2023**
(21) Anmeldenummer: 18187087.4
(22) Anmeldetag: 02.08.2018
(51) Int. Cl.: F16B 3/00, F16B 45/00, A63B 5/11, A63B 21/055

(54) **SEILHAKEN EINER BEFESTIGUNGSVORRICHTUNG FÜR EIN TRAMPOLIN**
ROPE HOOK FOR A FASTENING DEVICE FOR A TRAMPOLINE
CROCHETS À CÂBLE D'UN DISPOSITIF DE FIXATION POUR UN TRAMPOLINE

(43) Veröffentlichungstag der Anmeldung: 05.02.2020
(73) Patentinhaber: Angehrn AG Umformtechnik, 9113 Degersheim (CH)
(72) Erfinder: BISANG, Erwin, 6331 Hünenberg (CH); MEHR, Christian, 9533 Kirchberg (CH)
(74) Vertreter: Liebetanz, Michael

(56) Entgegenhaltungen:
- WO-A1-2017/191144
- US-A1- 2013 288 864
- US-A1- 2016 287 926
- US-B1- 7 914 426

## Beschreibung

### TECHNISCHES GEBIET

Die vorliegende Erfindung betrifft einen Seilhaken einer Befestigungsvorrichtung für ein Trampolin und betrifft ferner eine solche Befestigungsvorrichtung für das Einsetzen einer Schwungmatte des Trampolins in die Rahmenvorrichtung des Trampolins.

### STAND DER TECHNIK

Trampoline, bspw. Minitrampoline, welche zur Gesundheitsförderung und zu Therapiezwecken genutzt werden, benötigen für die Befestigung und Spannung bzw. Montage der Schwungmatte ein geeignetes und schwingfähiges Befestigungssystem. Dabei spannen Minitrampoline, wie aus der DE 102 26 707 bekannt, die Schwungmatte idealerweise mit einer Kombination von elastischen Elementen und Seilhaken anstelle einer Stahlfeder-basierten Bespannung.

Aus der WO 2017/191144 A1 der Anmelderin sind eine Reihe von verschiedenen Seilhaken bekannt, in die elastische Elemente mit Klemmelementen an den freien Enden einhängbar sind, wobei auf der gegenüberliegenden Seite der Seilhaken ein flexibles Bandelement der Schwungmatte herangeführt und in dem Seilhaken eingehängt wird.

Die US 7,914,426 zeigt ein Expander änliches Übungsgerät, umfassend zwei Griffeinheiten und eine Vielzahl von elastischen Stäben, die abnehmbar zwischen den beiden Griffeinheiten angebracht sind. Somit kann die Anzahl der zwischen den beiden Griffeinheiten montierten elastischen Stäbe frei verändert werden, um die Spannung der elastischen Stäbe entsprechend den Anforderungen des Benutzers einzustellen. Die Stäbe sind mit einem Verriegelungselement in dem Gehäuse der Griffeinheit fest gesetzt, wobei dieses Verriegelungselement durch eine Gehäuseabdeckung festgehalten wird.

### DARSTELLUNG DER ERFINDUNG

Ein grundlegendes Problem der Minitrampoline ist der Kompromiss zwischen möglichst geringem Aussendurchmesser des umgebenden Rahmens, der im Durchmesser möglichst grossen Sprungmatte und der von der Länge des Federwegs der elastischen Elemente definierten Dämpfung/Schwingung.

Ausgehend von dem oben genannten Stand der Technik liegt der Erfindung die Aufgabe zugrunde einen verbesserten Seilhaken anzugeben, mit dem die nutzbare Länge des elastischen Seil-Elementes für einen grösseren Federweg optimiert wird - ohne dass der Durchmesser der Trainings-Nutzfläche der Matte dadurch reduziert wird. Ferner ist es ein Ziel der Erfindung, den Benutzer des Trampolins bei Fehltritten auf Grund der geringen Grösse eines Minitrampolins vor Verletzungen an den Seilhaken und dem zugrundeliegenden Befestigungssystem zu schützen. Gleichzeitig soll das System wartungsfreundlich sein, so dass einzelne elastische Elemente und Seilhaken einfach austauschbar sind. Zudem soll mit der neuen Lösung eine spürbar bessere Schwingung erzielt werden.

Dafür wird ein Seilhaken zur Befestigung einer Schwungmatte an einem Trampolinrahmen mittels zwei elastischen Elementen und mindestens einem flexiblen Bandelement vorgesehen, wobei der Seilhaken ein Gehäuse mit vier Aufnahmen umfasst, wobei jedes elastische Element zwei freie Enden aufweist, die jeweils ein den Umfang des elastischen Elementes vergrösserndes Klemmelement aufweisen, wobei in die besagte Aufnahmen jeweils ein Klemmelement des/der (zwei) elastische(n) Elemente(n) einsetzbar sind. Dabei weist der Seilhaken einen in Umfangsrichtung quer zur Befestigungsrichtung geschlossenen Seilhakenkörper auf, wobei jeweils zwei Aufnahmen mittig von einem Aufnahmehohlraum im Seilhakenkörper getrennt sind, durch den ein Klemmelement hindurchführbar ist. Dann ist der Seilhaken mit zwei Abschlussstücken versehen, die jeweils in die besagten Aufnahmehohlräume einfügbar sind und jeweils über eine von dem Seilhakengehäuse wegweisende und aufeinander zugerichteten Abdeckungsrundung verfügen.

In praktischen Versuchen wurde ausserdem ermittelt, dass die neue Bespannungslösung markant bessere Standzeiten ergibt, d.h. die elastischen Elemente halten im Vergleich zu anderen Lösungen 50 bis 600 Prozent mehr Schwingungszyklen aus - somit steigt der Kundennutzen einerseits bezüglich der nachhaltigen Qualität der Schwingung (gesundheitsfördernder Impuls) und der Haltbarkeit der elastischen Elemente (Nutzungskosten).

Die im Kreis eng nebeneinander angeordneten Seilhaken mit den in Richtung Matten-Zentrum ausgerichteten Spoilern bilden visuell und taktil eine Warn-Markierung für den Benutzer. Sie signalisieren dem Benutzer optisch und beim Berühren mit den Füssen deutlich, dass dort die Trainingsfläche endet. Die sanft zur Trainingsfläche abfallenden Spoiler sorgen dafür, dass die textile Randzone sich in diesem Bereich elegant anhebt und sich sauber über die Seilhaken schmiegt.

Der Einsatz von einem Gummistrang ohne herkömmliche Umlenkung auf Mattenseite bringt nach Tests eine deutlich höhere Haltbarkeit im Bereich von Millionen Belastungszyklen gegenüber herkömmlichen Befestigungsverfahren wie z.B. aus DE 20 2007 019 487 U1 resp. US 2010/0009812 A1 der Firma bellicon bekannt. Bei der hier vorliegenden Lösung geht ein gerader Gummistrang vom Befestigungskörper ab, wird um das Rahmenrohr geführt und läuft wieder gerade in die zweite Aufnahmeposition des Aufnahmekörpers. Dabei sind Befestigungselemente auf den Gummiseilenden vorgesehen, die unter wachsender Zugbelastung stärker zubeissen können. Die Befestigung der Anbindungs-Schlaufe als flexibles Bandelement im Körper des Befestigungselementes statt hinter dem Befestigungselement reduziert die Baulänge zwischen der zum Mattenrand hin letzten Naht (mit der die Schlaufe mit der Matte vernäht ist) und der Abgangsstelle am Seilhaken bei der das elastische Element (Gummiseil) zum Trampolinrahmen hin in die freie Zugstrecke übergeht. Zudem erhöht diese kompakte Bauform den Halt, insbesondere durch die Schlaufen-Verklemmung statt der Umschlaufung eines Steges. Die Unterbrechung der Schlaufen-Verklemmung in der Mittelzone führt zu einer Reduktion der Bauhöhe, so dass damit mehr Höhe für die Einführung der Krokodil-Klemmen durch die Mitte-Position zwischen den beiden Befestigungspunkten für die linke bzw. rechte Gummiseil-Schlaufe entsteht.

Ein geschwungener Spoiler gestattet eine sanfte Umlenkung des Mattenrandes beziehungsweise der Mattenumrandung über den Befestigungskörper hinweg. Der Aufbau des Seilhakens als geschlossener Kasten (Aufnahme-Box) plus Spoiler ergibt zusammen eine kompaktere und sanftere Form, die bei Berührung durch Fehltritte nicht schmerzt. Der sich dabei ergebende Kranz/Ring der aneinander gereihten Seilhaken mit Spoilern ergibt eine prominente visuelle Markierung zur Begrenzung der sicheren Trainingszone.

In einer Basisausführung weist der Seilhaken zur Befestigung einer Schwungmatte an einem Trampolinrahmen mittels zwei elastischen Elementen und mindestens einem flexiblen Bandelement ein Seilhakengehäuse mit vier Aufnahmen auf. In diese werden elastische Elemente mit den Umfang der elastischen Elemente vergrössernde Klemmelemente eingesetzt. Der Seilhaken verfügt dann über mindestens einen mittig zwischen zwei der Aufnahmen vorgesehenen Aufnahmehohlraum und über ein dem besagten Aufnahmehohlraum zugeordnetes Abschlussstück, welches auch als Spoiler bezeichnet werden kann. Dieses Abschlussstück ist in den besagten Aufnahmehohlraum einfügbar und hat über eine von dem Seilhakengehäuse wegweisende und auf das mittig anzuordnende flexible Bandelement zu gerichtete Abdeckungsrundung, die den Benutzer optisch und taktil auf den Sprungmattenrand hinweist.

Es können zwei Aufnahmehohlräume im Seilhakenkörper des Seilhakens für zwei Abschlusstücke mit auf das mittig anzuordnende flexible Bandelement zu gerichtete Abdeckungsrundungen vorgesehen sein, also ein Spoiler oberhalb und ein Spoiler unterhalb des Bandelementes.

Die Aufnahmehohlräume können durchgehend sein und die Abschlussstücke verfügen dann vorzugsweise über eine mit dem Seilhakenkörper einen Formschluss herstellende Verbindung. Das kann ein Haken sein, der sich am Rand des Seilhakenkörpers einhakt. Die Aufnahmehohlräume können auch Sacklöcher sein oder einen beispielsweise kreuzschlitzförmigen Durchbruch aufweisen, durch den ein Knopf als Haltelement durchdrückbar ist.

Vorteilhaft in einer sehr reduzierten Bauform kann der Spoiler eingesetzt werden, wenn der Seilhakenkörper des Seilhakens in Umfangsrichtung quer zur Befestigungsrichtung geschlossen ist. Dann hat er auch eine höhere strukturelle Integrität.

Dann können zwei Aufnahmen mittig von dem Aufnahmehohlraum im Seilhakenkörper vorgesehen sein, die einen gemeinsamen Hohlraum bilden, wobei ein Klemmelement durch den Aufnahmehohlraum hindurchführbar und seitlich in eine der Aufnahmen bewegbar ist. Damit wird der Aufnahmehohlraum zugleich der Durchführraum für die Klemmelemente der elastischen Elemente und reduziert damit nochmal die notwendige Bauhöhe.

Mittig zwischen den oberen und unteren Aufnahmen ist ein Einführschlitz für das flexible Bandelement vorgesehen, welches eine Schlaufe mit einem darin einsetzbaren Rückhaltestab bildet, wobei der Einführschlitz auf Seite der Schlaufe sich zum zusammengeführten flexiblen Bandelement hin verjüngt, so dass die Schlaufe mit dem darin einsetzbaren Rückhaltestab im Bereich des Seilhakenkörpers zu liegen kommt, vorteilhafterweise bei Zugausübung im Kraftschluss. Damit endet dann diese Schlaufe bereits im Seilhakenkörper und nicht dahinter so dass in radialer Richtung nochmals Weg gespart wird, der der Seillänge des elastischen Elementes zu Gute kommt.

Die oberen und unteren Aufnahmen können in Richtung auf die eine Schlaufe bildenden elastischen Elemente hin verjüngt sein, so dass die Klemmelemente im Bereich des Seilhakenkörpers zu liegen kommen, vorteilhafterweise bei Zugausübung im Kraftschluss. Hier wird auf der von Seilelementseite in radialer Richtung des Trampolins noch einmal Weg gewonnen, so dass beide Zugelemente (i.e. Bandelement und Seil) mit ihren Befestigungskörpern (i.e. Rückhaltestab und Klemmelement) im Seilhakenkörper zu liegen kommen.

Die sich verjüngenden Wände können im Wesentlichen senkrecht zur Ebene des flexiblen Bandelementes ausgerichtet sein. Sie können auch parallel zur Ebene des flexiblen Bandelementes ausgerichtet sein, wobei sie bei einer Ausführung mit gemeinsamen Aufnahmehohlraum dann auf der einen Seite nur teilweise durch die den seitlichen Mittenabschluss bildende Schulter gebildet werden.

Ein Befestigungssystem zur Befestigung einer Schwungmatte an einem Trampolinrahmen, wobei die Schwungmatte eine Vielzahl von mit dieser verbundenen flexiblen Bandelementen aufweist, nutzt eine Vielzahl von Seilhaken nach einer der hier erwähnten Ausführungen, die der Anzahl der flexiblen Bandelemente entspricht.

Ein Trampolin mit einer Schwungmatte und einem Trampolinrahmen weist weiter ein hier beschriebenes Befestigungssystem auf, mit welchem die Schwungmatte im Trampolinrahmen eingehängt ist.

Schliesslich setzt ein Verfahren zur Befestigung einer Schwungmatte an einem Trampolinrahmen die Verfahrensschritte ein:
i) Bereitstellens eines hier beschriebenen Befestigungssystems;
ii) Durchführen eines flexiblen Bandelementes durch einen mittigen Einführschlitz des Seilhakens für ein seitliches Einführen eines Rückhaltestabes in die Schlaufenöffnung des flexiblen Bandelementes und Zurückziehen des flexiblen Bandelementes in den Einführschlitz,
iii) Umschlingen eines Abschnitts des Trampolinrahmens mit einem elastischen Element,
iv) Durchführen des ersten Klemmelements des ersten elastischen Elementes durch einen oberen Bereich des Aufnahmehohlraums des Seilhakens hindurch und seitliches Verschieben des elastischen Elementes mit dem seitlichen Klemmelement in die eine seitliche Aufnahme,
v) Durchführen des zweiten Klemmelements des ersten elastischen Elementes durch einen unteren Bereich des Aufnahmehohlraums des Seilhakens hindurch und seitliches Verschieben des elastischen Elementes mit dem seitlichen Klemmelement in die auf der gleichen Seite des Aufnahmehohlraums liegende seitliche Aufnahme,
vi) Durchführen des ersten Klemmelements des zweiten elastischen Elementes durch den oberen Bereich des Aufnahmehohlraums des Seilhakens hindurch und seitliches Verschieben des elastischen Elementes mit dem seitlichen Klemmelement in die verbleibende gegenüberliegende seitliche Aufnahme,
vii) Durchführen des zweiten Klemmelements des zweiten elastischen Elementes durch den unteren Bereich des Aufnahmehohlraums des Seilhakens hindurch und seitliches Verschieben des elastischen Elementes mit dem seitlichen Klemmelement in die verbleibende gegenüberliegende seitliche Aufnahme,
viii) Einsetzen eines ersten Abschlussstückes von Seiten des flexiblen Bandelements in den oberen Bereich des Aufnahmehohlraum und eines zweiten Abschlussstückes von Seiten des flexiblen Bandelements in den unteren Bereich des Aufnahmehohlraum, wobei das Abschlussstück jeweils über eine von dem Seilhakengehäuse wegweisende, von oben und unten auf das mittig anzuordnende flexible Bandelement zu gerichtete und dieses flexible Bandelement von oberhalb und von unterhalb abdeckende Abdeckungsrundung verfügt, und
ix) Einhängen der zwei Klemmelemente der beiden Seilhaken in die zugeordneten Aufnahmeräume des Seilhakens zur Spannung der Schwungmatte im Trampolinrahmen.

Wenn in der obigen Charakterisierung der Ausführungsformen zumeist von zwei elastischen Elementen für jeden Seilhaken gesprochen worden ist, so ergeben sich die gleichen oder ähnlichen Vorteile auch bei einem elastischen Element für jeden Seilhaken, da auch hier der Einführungsschlitz für das Bandelement und/oder das Klemmelement mit seiner Aufnahme auch bei einzelnen elastischen Elementen mit einem Seilhaken und zwei Aufnahmen erreichbar ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der

Zeichnungen beschrieben, die lediglich zur Erläuterung dienen und nicht einschränkend auszulegen sind. In den Zeichnungen zeigen:
- Fig. 1: zeigt eine perspektivische Ansicht einer Ausführungsform eines Seilhakens mit zwei elastischen Elementen und einem flexiblen Bandelement;
- Fig. 2: zeigt eine weitere perspektivische Ansicht der Ausführungsform nach Fig. 1;
- Fig. 3: zeigt eine perspektivische Ansicht des Seilhakens wie in der Fig. 1;
- Fig. 4: zeigt eine perspektivische Ansicht des Seilhakens wie in der Fig. 2;
- Fig. 5: zeigt eine Vorderansicht des Seilhakens wie auf die Fig. 3 blickend;
- Fig. 6: zeigt eine Rückansicht des Seilhakens wie auf die Fig. 4 blickend;
- Fig. 7: zeigt eine Seitenansicht des Seilhakens nach der Fig. 1;
- Fig. 8: zeigt eine Draufsicht auf den Seilhaken nach der Fig. 1;
- Fig. 9: zeigt eine perspektivische Ansicht des Spoilers wie in der Fig. 1 und somit wie in der Fig. 3 einsetzbar;
- Fig. 10: zeigt eine perspektivische Ansicht des Spoilers wie in der Fig. 2 und somit wie in der Fig. 4 einsetzbar;
- Fig. 11: zeigt eine Rückansicht auf den Spoiler nach Fig. 9;
- Fig. 12: zeigt eine Vorderansicht auf den Spoiler nach Fig. 9;
- Fig. 13: zeigt eine Seitenansicht auf den Spoiler nach Fig. 9;
- Fig. 14: zeigt eine Draufsicht auf den Spoiler nach Fig. 9;
- Fig. 15: zeigt eine perspektivische Ansicht des Seilhakens wie in Fig. 2, wobei das Bandelement eingesetzt ist und ein erstes elastisches Element eingesetzt wird;
- Fig. 16: zeigt eine Ansicht der Fig. 15 von aussen vom Trampolin aus gesehen;
- Fig. 17: zeigt eine Ansicht der Fig. 15 von oben aus gesehen;
- Fig. 18: zeigt eine perspektivische Ansicht des Seilhakens nach Fig. 1 mit eingelegtem Bandelement aber ohne eingelegtes elastisches Element;
- Fig. 19: zeigt eine Vorderansicht von der Aussenseite eines Trampolins auf den Seilhaken mit den vier Klemmelementen sowie den beiden eingesetzten Spoilern und dem eingelegtem Bandelement nach Fig. 18; (die elastischen Elemente/Gummiseile in den Klemmelementen sind nicht dargestellt);
- Fig. 20: zeigt eine Seitenansicht auf die Ansicht nach Fig. 19;
- Fig. 21: zeigt eine Draufsicht auf die Ansicht nach Fig. 19 und 20;
- Fig. 22: zeigt eine Schnittansicht entlang der Linie XXII-XXII in Fig. 21;
- Fig. 23: zeigt eine Seitenansicht auf die Ansicht nach Fig. 21;
- Fig. 24: zeigt eine Seitenansicht auf das flexible Bandelement mit eingesetztem Rückhaltestab;
- Fig. 25: zeigt eine Draufsicht auf Fig. 24;
- Fig. 26: zeigt eine perspektivische Ansicht auf Fig. 24, wie das flexible Bandelement in Fig. 2 eingesetzt ist:
- Fig. 27: zeigt eine perspektivische Ansicht eines Klemmelementes für einen Seilhaken nach Ausführungsbeispielen der Erfindung;
- Fig. 28: zeigt eine Seitenansicht auf das Klemmelement nach Fig. 27;
- Fig. 29: zeigt eine Schnittansicht entlang der Linie XXIX-XXIX in Fig. 28;
- Fig. 30: zeigt eine perspektivische Ansicht des Klemmelementes nach Fig. 27 mit eingesetztem Gummiseil und Klammer;
- Fig. 31: zeigt eine Seitenansicht auf das Klemmelement nach Fig. 30;
- Fig. 32: zeigt eine Draufsicht auf das Klemmelement nach Fig. 30 mit einer Darstellung von verdeckten Elementen;
- Fig. 33: zeigt eine perspektivische Ansicht des Klemmelementes nach Fig. 27 mit eingesetztem Gummiseil und zwei Klammern;
- Fig. 34: zeigt eine Seitenansicht auf das Klemmelement nach Fig. 33;
- Fig. 35: zeigt eine Draufsicht auf das Klemmelement nach Fig. 33 mit einer Darstellung von verdeckten Elementen;
- Fig. 36: zeigt eine Schnittansicht entlang der Linie XXXVI-XXXVI in Fig. 34;
- Fig. 37: zeigt eine Schnittansicht entlang der Linie XXXVII-XXXVII in Fig. 34;
- Fig. 38: zeigt eine perspektivische Ansicht einer weiteren Ausführungsform eines Seilhakens mit zwei elastischen Elementen und einem flexiblen Bandelement;
- Fig. 39: zeigt eine weitere perspektivische Ansicht der Ausführungsform nach Fig. 38;
- Fig. 40: zeigt eine Vorderansicht von der Trampolinmitte her auf den Seilhaken nach Fig. 38;
- Fig. 41: zeigt eine weitere perspektivische Ansicht des Seilhakens nach Fig. 38 mit nur einem noch nicht vollständig eingelegten elastischen Element;
- Fig. 42: zeigt eine Draufsicht auf einen Seilhaken nach Fig. 38 mit einem anderen flexiblen Bandelement;
- Fig. 43: zeigt eine Querschnittsansicht auf den Seilhaken nach Fig. 38;
- Fig. 44: zeigt eine perspektivische Ansicht eines Beispiels (nicht nach der Erfindung) eines Seilhakens mit einem flexiblen Bandelement für nur ein elastisches Element; und
- Fig. 45: zeigt eine perspektivische Ansicht eines Beispiels (nicht nach der Erfindung) eines Seilhakens mit einem flexiblen Bandelement ebenfalls für nur ein elastisches Element, mit einem noch nicht vollständig eingelegten elastischen Element.

### BESCHREIBUNG BEVORZUGTER AUSFÜHRUNGSFORMEN

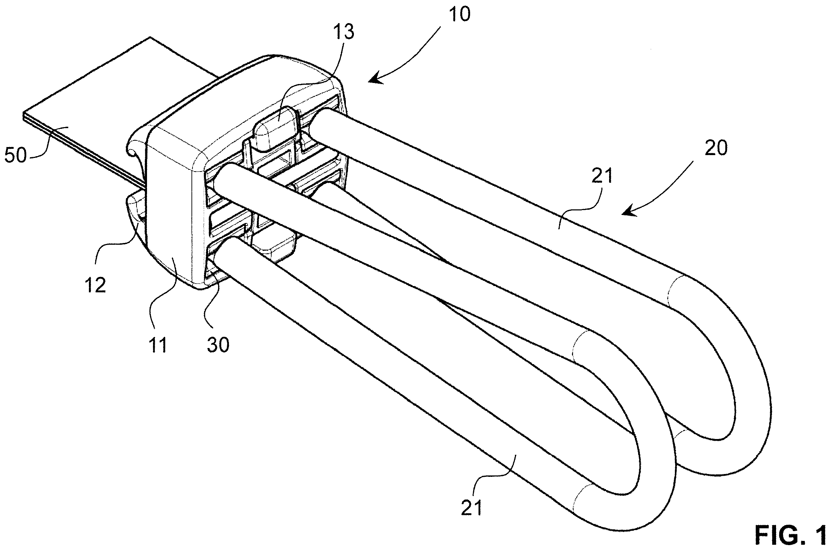

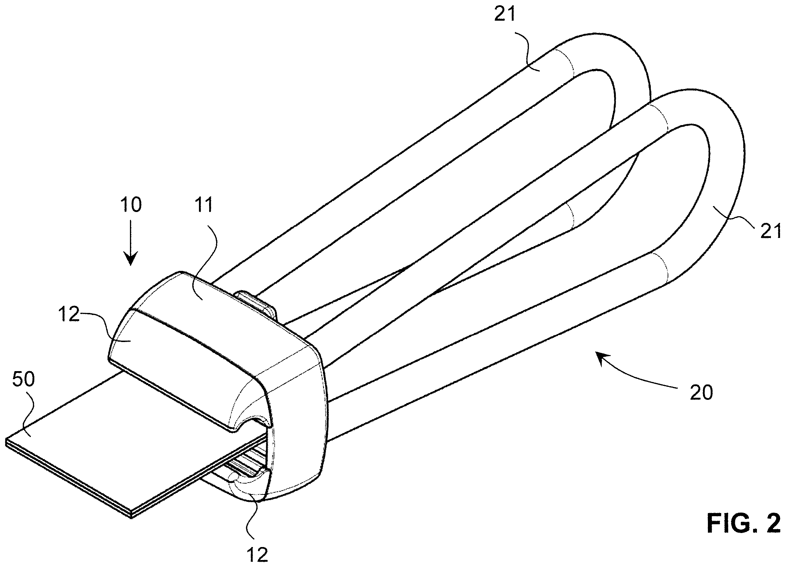

Fig. 1 zeigt eine perspektivische Ansicht einer Ausführungsform eines Seilhakens 10 mit zwei elastischen Elementen 20 und einem flexiblen Bandelement 50 mit einem Blick von der Seite der elastischen Elemente 20, während die Fig. 2 eine andere perspektivische Ansicht der Ausführungsform nach Fig. 1 aus der Sicht des flexiblen Bandelements 50 liefert.

Jedes elastische Element 20 verfügt über ein Gummiseil 21, auf welches an den beiden freien Enden ein Klemmelement 30 aufgesetzt ist. Die Klemmelemente 30 werden im Zusammenhang mit anderen Figuren näher beschrieben. Wesentlich für die Funktion der Befestigungsvorrichtung bestehend aus Seilhaken 10, elastischem Element 20 und Bandelement 50 ist, dass das elastische Element bei seiner halben Länge um über 180 Grad zurückgebogen ist und die beiden Klemmelemente 30 in entsprechende Aufnahmen 14 des Seilhakens 10 einsetzbar sind. Diese Aufnahmen 14 werden im Zusammenhang mit weiteren Figuren näher beschrieben. Der Körper 11 des Seilhakens 10 ist seitlich gesehen, also in Längsrichtung der eingesetzten elastischen Elemente 20 und des Bandelements 50 rechteckig geschlossen mit Abrundungen. Ferner sind in den Fig. 1 und 2 zwei Spoiler 12 in Richtung des Bandelements 50 eingesetzt, die bündig mit der oberen bzw. unteren Oberfläche des Körpers 11 ausgehend aufeinander zu in Richtung Bandelement 50 gebogen sind und dieses somit in einem Teilbereich abdeckend umschliessen. Das Bandelement 50 wird, wie bekannt an der Sprungmatte befestigt, insbesondere vernäht, wobei die Sprungmatte, wie noch zu sehen sein wird, bis in den Bereich der vorderen Kante der Spoiler 12 angeordnet sein kann. Jeder Spoiler hat einen Rasthaken 13, mit dem er in dem inneren Hohlraum des Körpers 11 des Seilhakens gehalten wird; als Gegenfläche dient die Trennfläche zwischen Körper 11 und dem Spoiler 12.

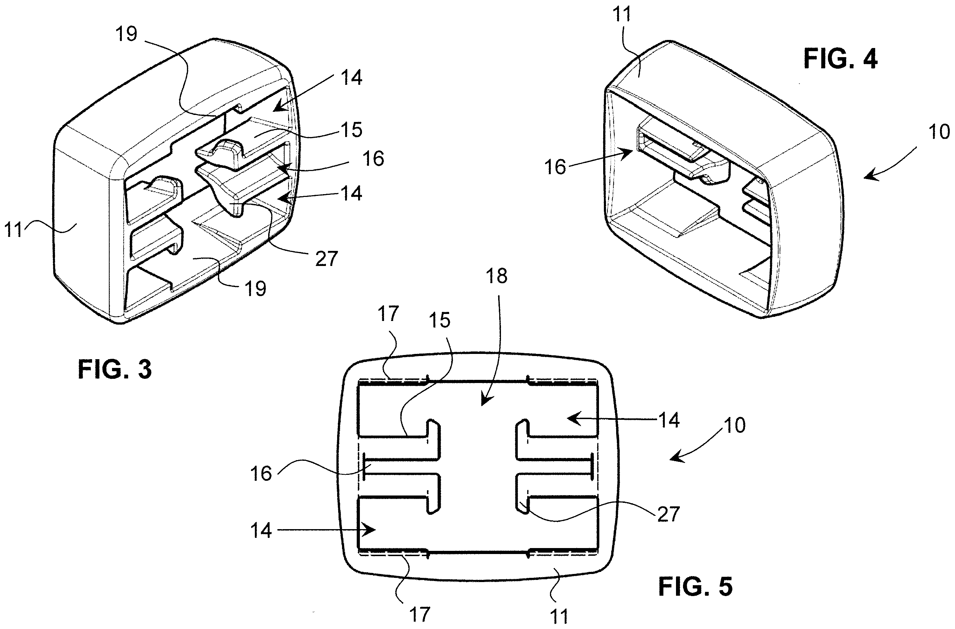

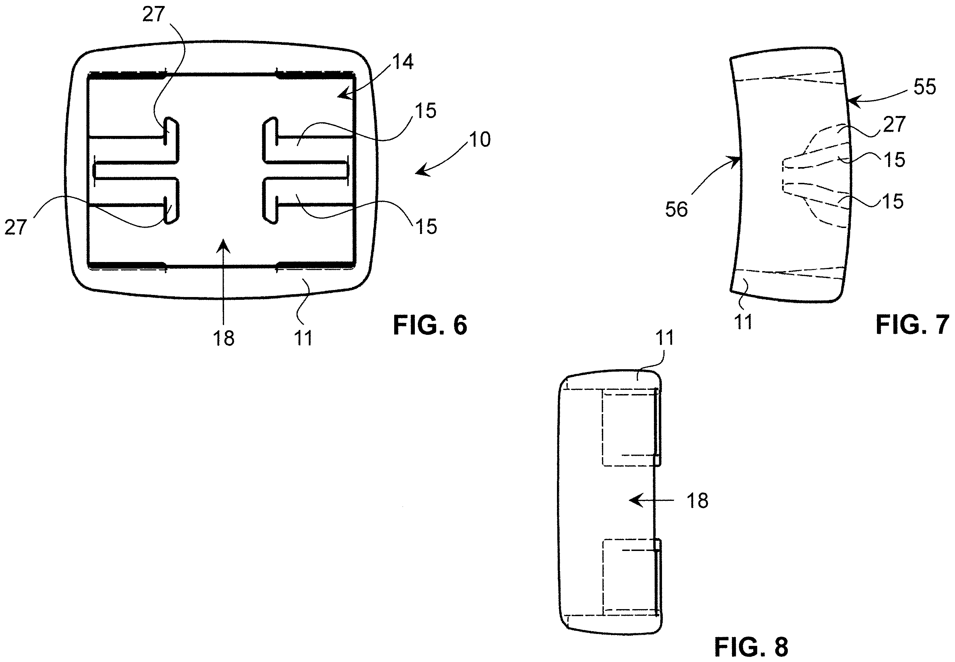

Die Fig. 3 zeigt eine perspektivische Front-Ansicht des (leeren) Seilhakens wie in der Fig. 1; die Fig. 4 zeigt eine perspektivische Rück-Ansicht des Seilhakens wie in der Fig. 2 (in gefüllter Form) dargestellt; Fig. 5 zeigt eine Rückansicht des Seilhakens wie auf die Fig. 3 blickend; Fig. 6 zeigt eine Vorderansicht des Seilhakens wie auf die Fig. 4 blickend; Fig. 7 zeigt eine Seitenansicht des Seilhakens nach der Fig. 1: und schliesslich Fig. 8 zeigt eine Draufsicht auf den Seilhaken nach der Fig. 1:
Der Seilhakenkörper 11 weist vier in Längsrichtung durchgehende Aufnahmen 14 auf, die in den Ecken der inneren Ausnehmung des ansonsten umfangseitig geschlossenen Seilhakens 10 vorgesehen sind. Die obere Aufnahme 14 ist von der unteren Aufnahme 14 durch zwei beabstandet voneinander angeordnete Rampen 15 getrennt. Die Rampe 15 startet mittiger in Richtung des Bandelementes 15 (hier nicht eingelegt) und steigt in longitudinaler Richtung leicht an, was die Aufnahme 14 in dieser longitudinalen Richtung verengt. Zwischen den beiden übereinander gegenüberliegenden Rampen 14 ist ein Einlegeschlitz 16 vorgesehen. Die Rampen 14 sind durch eine Schulter 27 seitlich abgeschlossen, so dass jede Aufnahme 14 auf drei Seiten voll abgeschlossen und von einer Seite zu einem Drittel abgeschlossen ist. Mittig besteht eine doppelte Spoileraufnahme 18 zwischen der Oberseite und der Unterseite des Körpers 11. Diese ist als doppelte Aufnahme bezeichnet, weil zwei Spoiler 12 in diesen Raum eingesetzt werden, einer oben, einer unten. Dabei bestehen mittig zwischen den Aufnahmen 14 Aufnahmerampen 19, die sich auf der zu den elastischen Elementen 20 gerichteten Seite durch eine Vertiefung im Körper 11 niederschlagen. Die Schultern oder seitlichen Führungsrippen 27 gewährleisten, dass die Klemmelemente 30 gegen die Mitte in ihrer Position fixiert sind. Es ist auch möglich, dass zwei getrennte Spoileraufnahmen 18 vorgesehen sind, wenn nämlich die oberen und unteren Begrenzungswände des Einführschlitzes durchgängig gestaltet sind und nicht an den Schultern 27 enden. Im Falle von einer gemeinsamen Spoileraufnahme 18 wie in Fig. 5 und 6 dargestellt, kann weiterhin von zwei Spoileraufnahmen 18 gesprochen werden, da die oberen Klemmelemente 30 der Elemente 20 durch den oberen Abschnitt hindurchgeführt werden und die unteren Klemmelemente 30 der Elemente 20 durch den unteren Abschnitt hindurchgeführt werden.

Aus der Fig. 7 ist zu erkennen, dass der Körper 11 in einer Seitenansicht gekrümmt ausgeführt sein kann, wobei die Krümmung auf die Trampolinmitte hin ausgerichtet ist. Die zum äusseren Spannrahmen ausgerichtete Seite hat die konvexe Aussenseite 55 und die zur Trampolinmitte hin ausgerichtete Seite hat die konkave Innenseite 56, an die sich der Spoiler 12, soweit eingesetzt, direkt anschliesst.

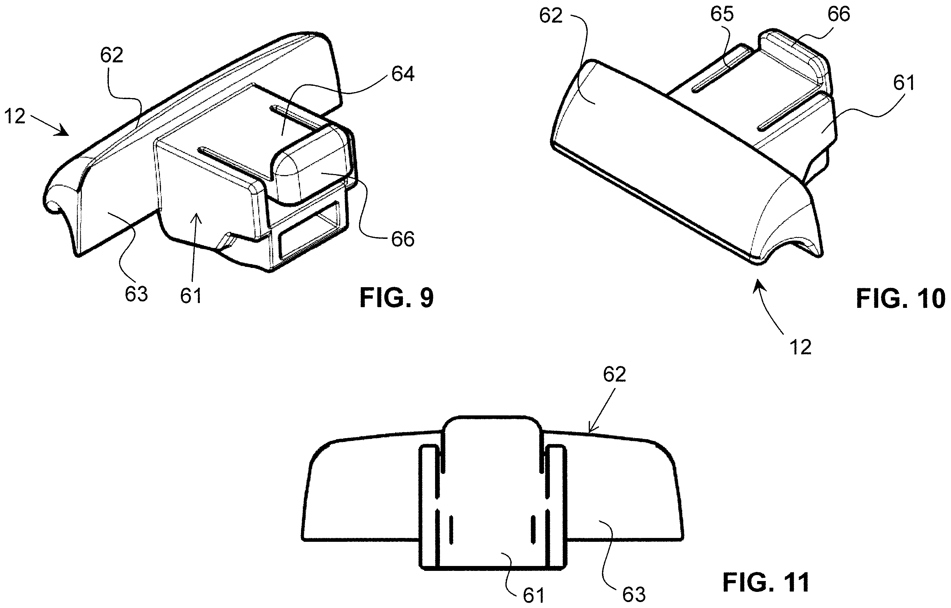

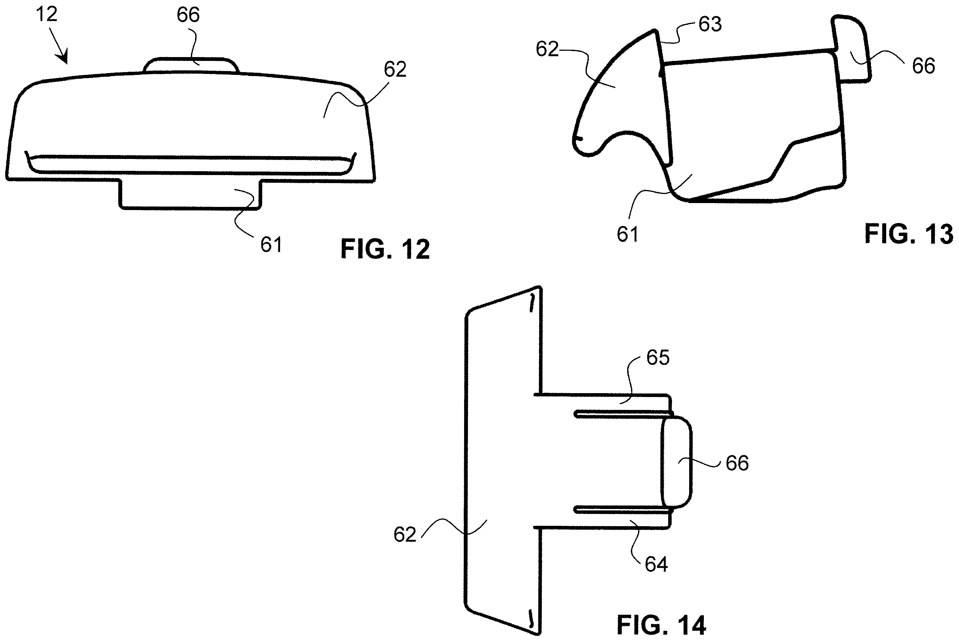

Die Fig. 9 zeigt eine perspektivische Ansicht des Spoilers 12, wie er in der Fig. 1 und somit wie er in der Fig. 3 einsetzbar ist. Die Fig. 10 zeigt eine andere perspektivische Ansicht des Spoilers 12, wie er in der Fig. 2 und somit wie er in der Fig. 4 einsetzbar ist, Die Fig. 11 zeigt eine Rückansicht auf den Spoiler 12 nach Fig. 9. Die Fig. 12 zeigt eine Vorderansicht auf den Spoiler 12 nach Fig. 9. Die Fig. 13 zeigt eine Seitenansicht auf den Spoiler 12 nach Fig. 9. Die Fig. 14 zeigt eine Draufsicht auf den Spoiler 12 nach Fig. 9.

Der Spoiler 12 wird von vorne, von Seiten des Bandelements 50 eingesetzt. Fig. 9 zeigt dabei den oberen Spoiler 12 mit seinem Zentralkörper, der den oberen Aufnahmeraum in der Spoileraufnahme 18 ausfüllt. Dieser ist oberhalb des Bandelementes 50 einzusetzen. Die Rückwand 63 steht gegen den Körper 11 an und verhindert, dass das Klemmelement 30 in die Innenrichtung herausrutschen kann. Dafür ist die mittlere Zunge als Rastelement 64 mit Haken 66 vorgesehen (in Fig. 1 auch als Element 13 bezeichnet), welches sich hinter dem Körper des Seilhakens 11 einhaken kann. Dieses Rastelement 64 ist durch seitliche Schlitze 65 gegenüber den Seitenwänden des Spoilerkörpers 62 abgesetzt.

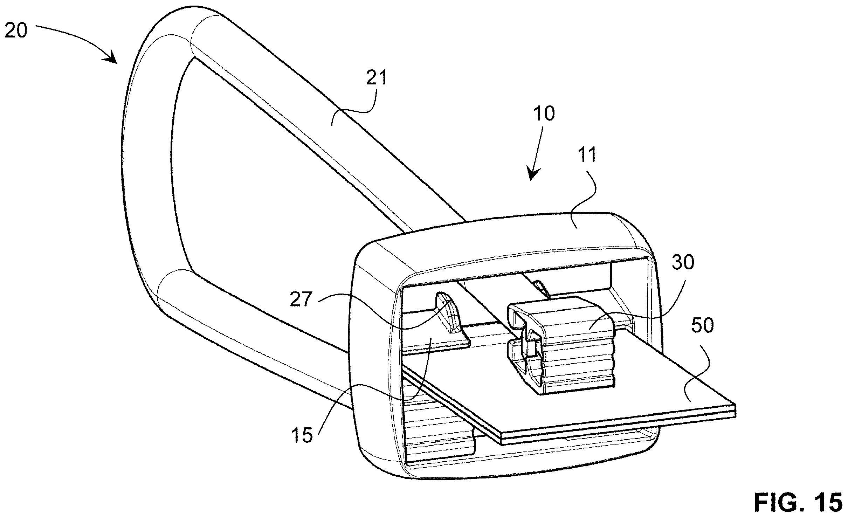

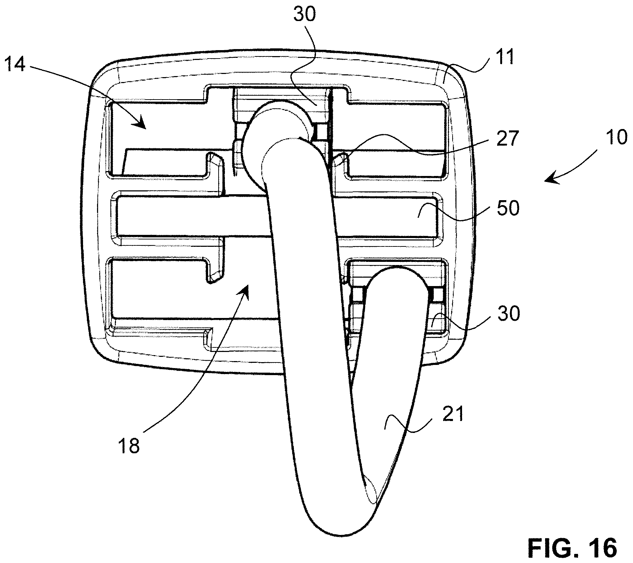

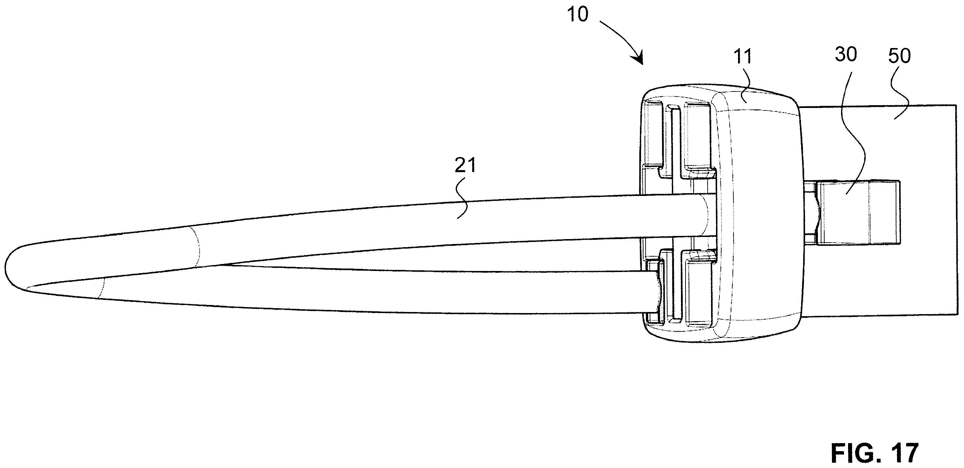

Die Fig. 15 zeigt eine perspektivische Ansicht des Seilhakens 10 wie in Fig. 2, wobei das Bandelement 50 eingesetzt ist und ein erstes elastisches Element 20 bereits in der unteren Aufnahme 14 eingesetzt ist und das gegenüberliegende Ende des elastischen Elementes 20 auf das Einlegen in der oberen Aufnahmeposition vorbereitet wird (Einführung durch die Mittelzone, danach seitliches Verschieben zu einer Endposition über der Aufnahmeposition des zweiten Endes des elastischen Elementes). Die Fig. 16 zeigt eine Ansicht der Fig. 15 von aussen vom Trampolin aus gesehen und die Fig. 17 zeigt eine Ansicht der Fig. 15 von oben aus gesehen.

Die Fig. 15 bis 17 zeigen die Situation, bei der das flexible Bandelement bereits von aussen durch den Einlegeschlitz 16 hindurchgeschoben ist. Dabei ist der Rückhaltestab 51 vor einem Zurückziehen des Schlaufenauges in den Schlitz 16 eingesetzt worden, so dass das flexible Bandelement 50 verriegelt ist. Der Einlegeschlitz kann sich insbesondere auf dem sprungmattenfernen Ende vergrössern, um einen sich in Innenrichtung verjüngenden Schlitz zu bilden, in den das Schlaufenauge im Kraftschluss festgehalten wird. Dabei ist es von Vorteil, dass das vollständige Schlaufenauge im Seilhakenkörper 11 eingezogen ist, so dass die Kraft bereits dort wirkt und der Wegverlust von Matte zu federndem Element 20 möglichst kurz ist. Es ist ja an dem freien Ende an dem Sprungtuch oder Sprungmatte befestigt, insbesondere vernäht. Dann ist bereits ein Klemmelement in die entsprechende Aufnahme 14 eingesetzt. Zuvor ist das Klemmelement von aussen durch die Aufnahme 14 im ansonsten geschlossenen Körper 11 mittig hindurchgeführt worden, seitlich verschoben und als erstes Klemmelement 30 bereits positioniert worden, das zweite Klemmelement 30 ist in der Fig. 15 gerade durch den obere mittleren Aufnahmeraum 14 durchgeschoben worden und wird jetzt seitlich nach links (im Blick auf das Zeichenblatt) hinter der Schulter 27 verschoben werden, um dann in der oberen linken Aufnahme (im Blick auf das Zeichenblatt) verriegelt zu werden, da das Klemmelement 30 sich in Richtung des elastischen Elementes 20 konisch verjüngt und dies dem Rampenverlauf 15 entspricht.

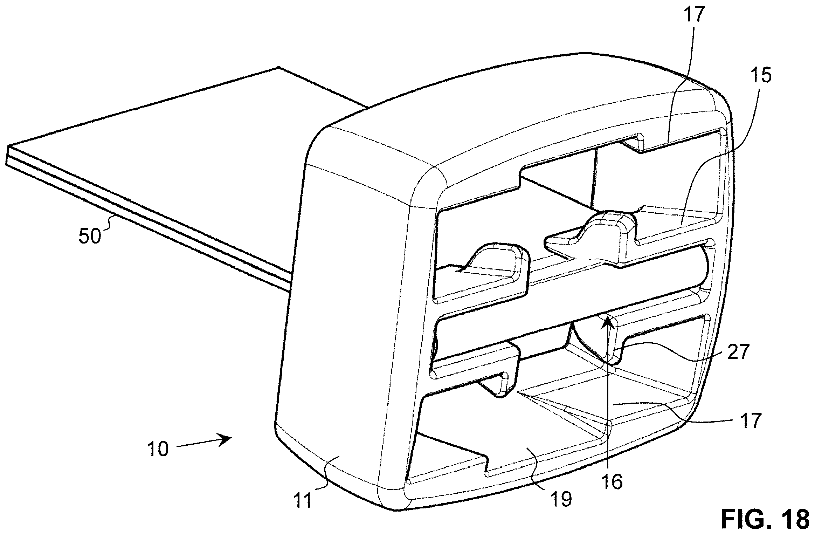

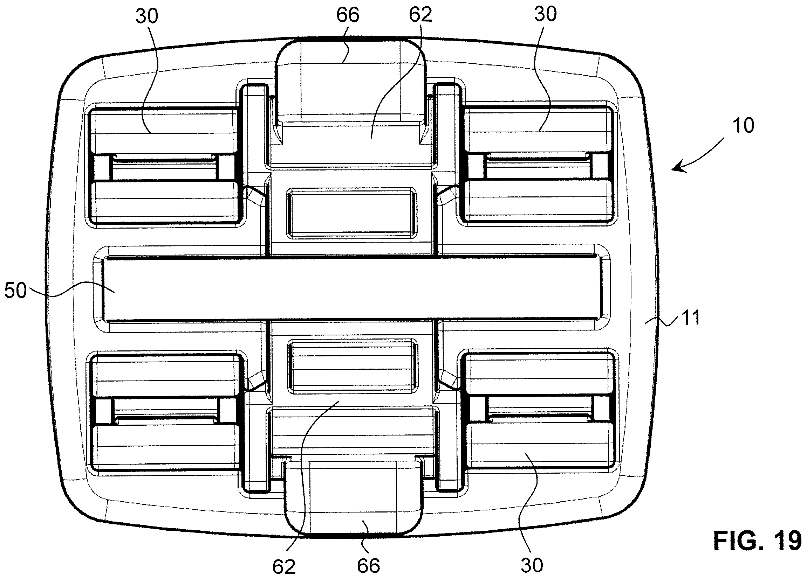

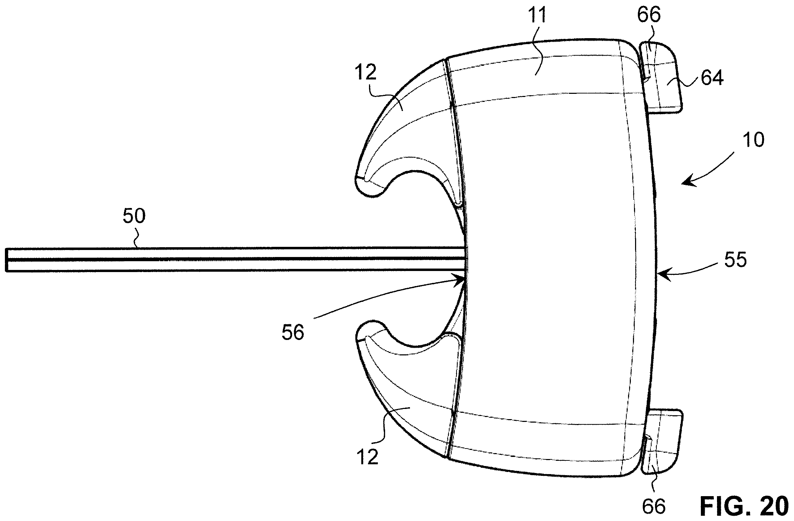

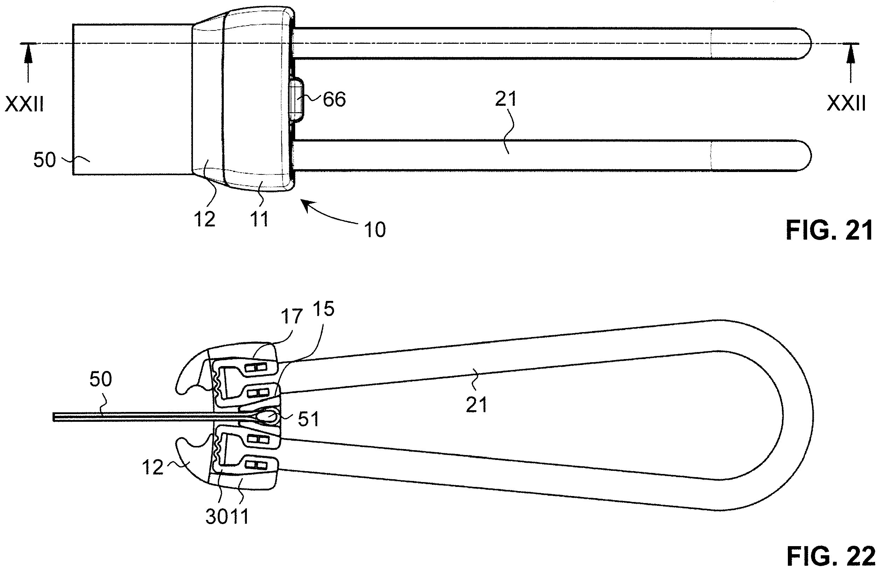

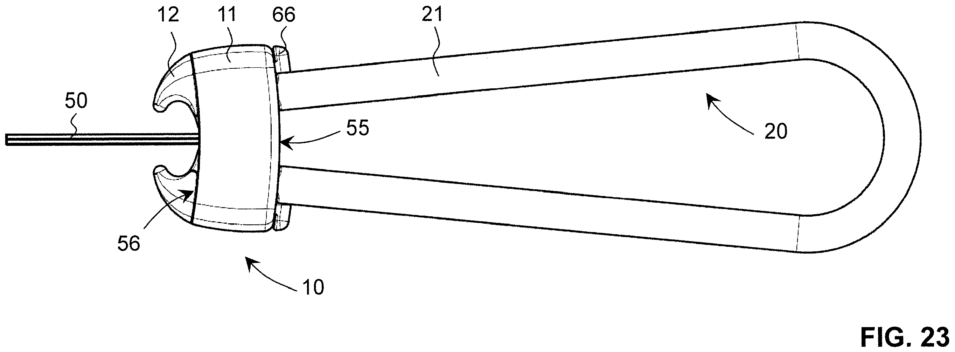

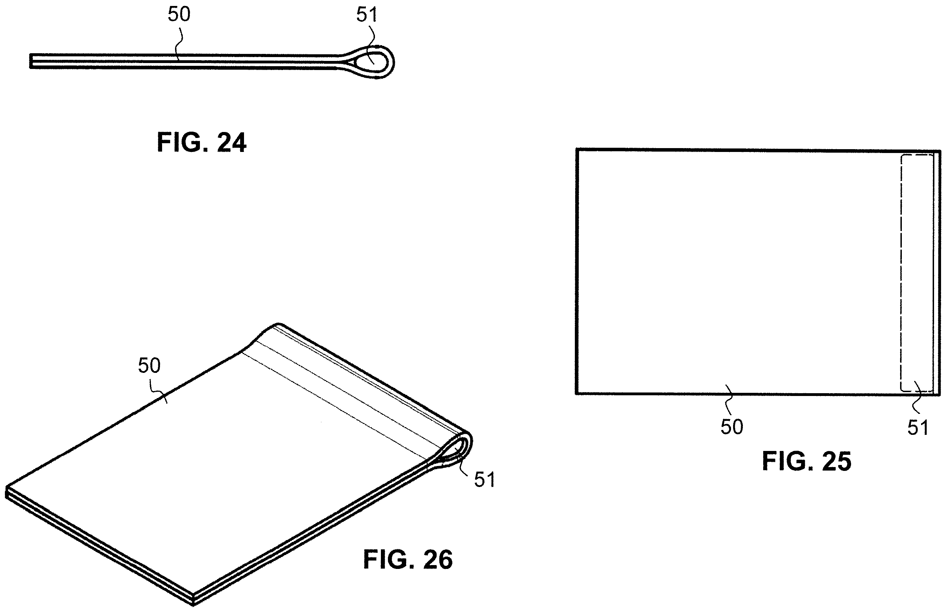

Die Fig. 18 zeigt eine perspektivische Ansicht des Seilhakens 10 nach Fig. 1 mit eingelegtem Bandelement 50 aber ohne eingelegtes elastisches Element 20. Die Fig. 19 zeigt eine Vorderansicht von der Aussenseite eines Trampolins auf den Seilhaken 10 mit vier eingesetzten Klemmelementen 30, die zusammen mit den nicht dargestellten Gummiseilen 21 die elastischen Elemente 20 bilden und eingelegtem Bandelement 50 nach Fig. 18. Die Fig. 20 zeigt eine Seitenansicht auf die Ansicht nach Fig. 19. Die Fig. 21 zeigt dann eine Draufsicht auf die Ansicht nach Fig. 19 und 20; wobei die Fig. 22 die Schnittansicht entlang der Linie XXII-XXII aus Fig. 21 ist. Die Fig. 23 zeigt eine Seitenansicht auf die Ansicht nach Fig. 21 . Fig. 24 zeigt eine Seitenansicht auf das flexible Bandelement 50 mit eingesetztem Rückhaltestab 51. Die Fig. 25 zeigt eine Draufsicht auf Fig. 24 und Fig. 26 zeigt eine perspektivische Ansicht auf Fig. 24 in einer Art und Weise, die zeigt, wie das flexible Bandelement 50 in Fig. 2 eingesetzt ist.

Die Fig. 18 zeigt nur das eingelegte flexible Bandelement 50 im Einlegeschlitz 16. Die Fig. 19 zeigt dann von vorne, von aussen eines Trampolins gesehen den vollkommen gefüllten Raum der Aufnahme 14, der mit vier Klemmelementen 30 gefüllt ist, die zu den zwei elastischen Elementen 20 gehören, die das Element vervollständigen, aber hier nicht dargestellt sind. Durch diese nahezu vollkommene Füllung des vom Körper 11 umschlossenen Raumes ergibt sich eine hohe Stabilität des Elementes, welches durch die Spoiler 12 noch verstärkt wird, die, wie in der Fig. 20 zu erkennen, zum flexiblen Bandelement 50 hin überstehen und auf der Gegenseite durch den Haken 66 am Rastelement 64 in einem Formschluss und Kraftschluss an und im Körper 11 des Seilhakens 10 gehalten werden. Diese Vorgehensweise gestattet eine geringe Bauhöhe des Seilhakenkörpers 11, da die Klemmelemente 30 in einem mehrfach nutzbaren Freiraum eingeschoben werden und ebenfalls - wie das flexible Bandelement 50 - in diesem Seilhakenkörper 11 verriegelt werden.

Die Fig. 21 bis 23 zeigen dann untereinander eine Schnittansicht, eine Draufsicht und eine Seitenansicht auf einen Seilhaken 10 mit elastischen Elementen 20 und flexiblem Bandelement 50. Dabei ist das Bandelement 50 durchgängig gleich breit quer zur longitudinalen Richtung / Befestigungsrichtung. Hier kann das Bandelement auch zum Seilhaken 10 hin schmaler werden und sich verjüngen, um weiterhin einen breiten Befestigungsstreifen an der Matte beziehungsweise am Sprungtuch zur Verfügung zu haben. Gut erkennbar ist in Fig. 23 die Abdeckung des flexiblen Bandelements 50 nahe um und am Seilhaken 10.

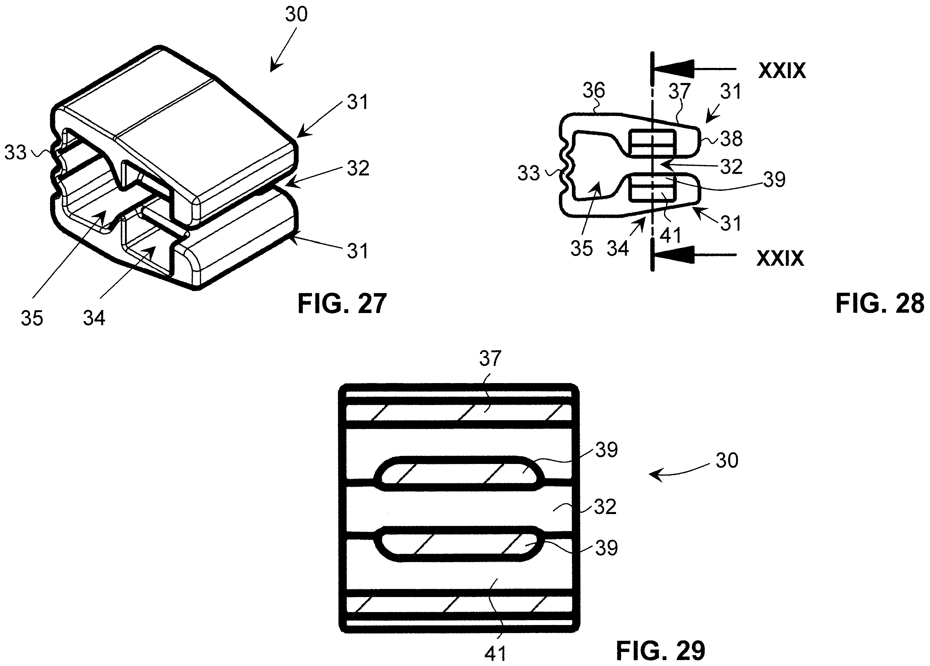

Die Fig. 27 zeigt eine perspektivische Ansicht eines Klemmelementes 30 für einen Seilhaken, z. B. den Seilhaken 10, nach Ausführungsbeispielen der Erfindung. Die Fig. 28 zeigt eine dazugehörige Seitenansicht auf das Klemmelement 30 nach Fig. 27 und die Fig. 29 zeigt eine Schnittansicht entlang der Linie XXIX-XXIX in Fig. 28. Dieser ist bereits in den Fig. 1 bis 26 im Einsatz an elastischen Elementen 20 dargestellt worden.

Das Klemmelement 30 ist C-förmig und weist zwei freie Enden 31 mit einem dazwischen liegenden Einführschlitz 32 auf. Die freien Enden 31 sind über ein Scharnier 33, insbesondere ein S-förmiges Filmscharnier miteinander verbunden. Hinter dem Einführschlitz 32 folgen ein Bereich der Klammeraufnahme 34 und ein Expandierraum 35.

In der Seitenansicht der Fig. 28 ist besser zu erkennen, dass das C-förmige Klemmelement 30 an das Scharnier 33 anschliessend zwei parallel zueinander verlaufenden Aussenwände 36 aufweist, die dann in einer Verjüngung 37 aufeinander zu laufen. Die Verjüngung 37 bildet dann mit einer komplementären Fläche wie der Rampe 19 im Seilhaken 10 einen Kraftschluss für eine auf das Gummiseil 21 ausgeübte Zugkraft. Der Durchmesser eines eingelegten Gummiseils 21 ist vorteilhafterweise nur unwesentlich kleiner als die Breite an der Vorderfläche 38, so dass das Gummiseils 21 in dem Einführschlitz 32 im Bereich der Klammeraufnahme 34 stark komprimiert ist. Es kann sich dann hinter dem Bereich der Klammeraufnahme 34 im Expandierraum 35 wieder ausdehnen und füllt diese im Wesentlichen aus. Dabei bildet das Scharnier 33 zugleich einen Anschlag für das Vorschieben des Gummiseils 21. Die auch auf der Aussenseite keilförmig verjüngend aufeinander zulaufenden freien Enden des Klemmelementes (30) verstärken beim Einlegen des Gummiseils 21 unter Zugspannung den Druck auf die innen liegenden Festhalteflächen, die durch die Rampen 15 bzw. 115 oder 117 gebildet werden.

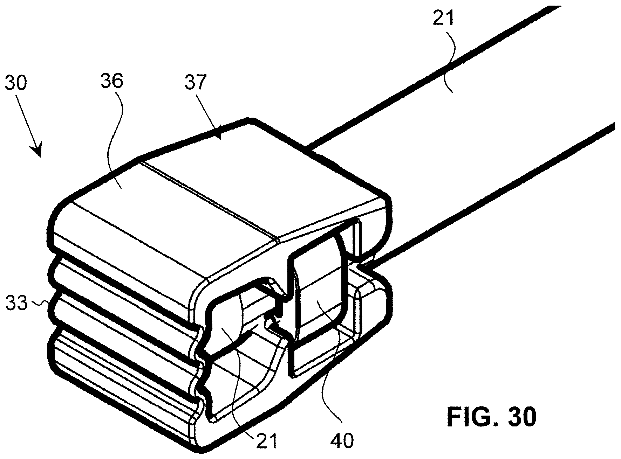

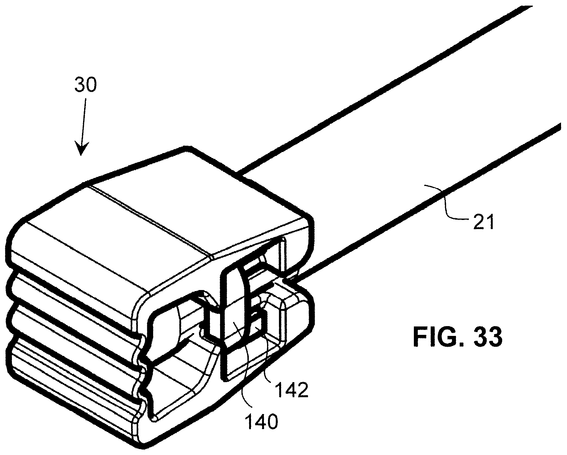

In der Schnittansicht der Fig. 29 durch die Klammeraufnahme 34 ist der zentrale Einführschlitz 32 von zwei Stegen 39 der Klammeraufnahme 34 umgeben, an die sich quer durchgehende Klammerräume 41 anschliessen. Diese quer durch das Klemmelement 30 hindurchgehenden Schlitze 41 sind vorgesehen, eine oder vorteilhafterweise zwei Klammern 40, wie sie in der Fig. 30 oder Fig. 33 dargestellt sind, aufzunehmen.

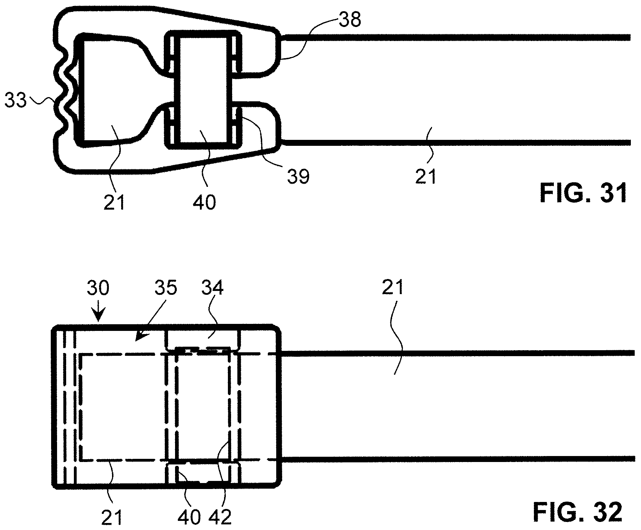

Die Fig. 30 zeigt eine perspektivische Ansicht des Klemmelementes 30 nach Fig. 27 mit eingesetztem Gummiseil 21 und einer Klammer 40. Die Fig. 31 zeigt eine Seitenansicht auf das Klemmelement 30 nach Fig. 30 und Fig. 32 zeigt eine Draufsicht auf das Klemmelement 30 nach Fig. 30 mit einer Darstellung von verdeckten Elementen. Die Klammer 40 ist ein im Wesentlichen C-förmiges Stahlfederelement, wobei die freien Enden 42 (siehe Fig. 32) eine Länge haben, dass sie gerade nicht aus dem Klammerraum 41 auf der gegenüberliegenden Seite herausragen. Der Abstand der freien Enden 42 voneinander, gegeben durch die Breite der verbindenden Deckfläche der Klammer 40 ist dergestalt, dass die Klammer 40 unter Druck in die Schlitze 41 einschiebbar ist und sich entweder nach innen klemmt oder nach aussen gegen die Verjüngung 37 abstemmt, wobei das Klemmen nach Innen bevorzugt ist. Die Klammer 40 hat eine Breite, die mit Spiel die Länge (in Längsrichtung des Gummiseils 21) der Klammeraufnahme 34 einnimmt. Die Anschläge für die Klammer-Positionierung sind von der seitlichen Aussenwand zurückgesetzt, damit Klammer und Klemmenwand eine ebene Fläche ergeben.

Der Durchmesser des Klammerraums 41, also die Breite des Schlitzes oder die Dicke, auf welche das Gummiseil 21 in einer Richtung (parallel zur Hauptebene des Scharniers 33) komprimiert ist, kann je nach Seilstärke unterschiedlich sein. Dabei verändert sich dann im Wesentlichen der bei der Klammeraufnahme 34 bestehende Raum und damit die Dicke des Steges 39, da der Klammerraum 41 im Wesentlichen gleich bleibt, da die Klammern 40 in allen Fällen dieselben sein können. Diese Unterschiede ergeben sich, wenn Gummiseile 21 unterschiedlicher Stärkeklassen wegen unterschiedlichem Gewicht des Benutzers verbaut werden. Solche Gummiseile 21 haben leicht unterschiedliche Durchmesser.

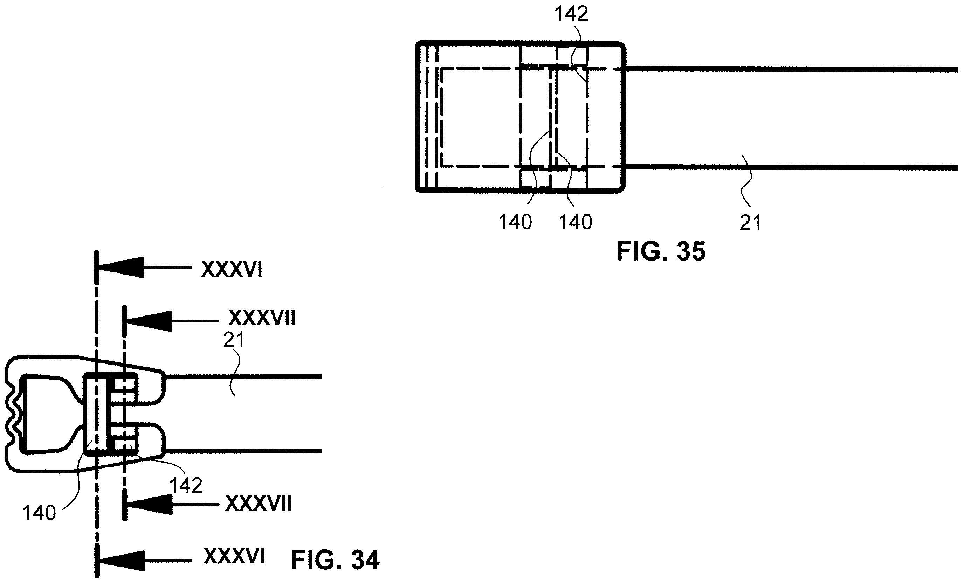

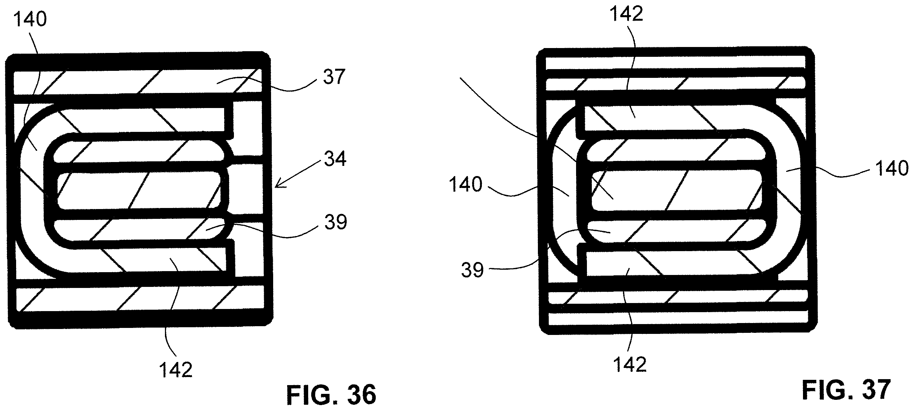

Die Fig. 33 zeigt eine perspektivische Ansicht des Klemmelementes 30 nach Fig. 27 mit eingesetztem Gummiseil 21 und zwei Klammern 140. Die Fig. 34 zeigt eine Seitenansicht auf das Klemmelement 30 nach Fig. 33 und die Fig. 35 zeigt eine Draufsicht auf das Klemmelement 30 nach Fig. 33 mit einer Darstellung von verdeckten Elementen. Zusätzlich zeigen Fig. 36 eine Schnittansicht entlang der Linie XXXVI-XXXVI in Fig. 34 und Fig. 37 eine Schnittansicht entlang der Linie XXXVII-XXXVII in Fig. 34. Der Unterschied zwischen den Klemmelementen 30 nach Fig. 30 und Fig. 33 liegt darin, dass das Gummiseil bei der Ausführung nach Fig. 30 von einer breiten Klammer 40 fixiert wird, während in den Fig. 33 bis Fig. 35 das Gummiseil 21 von zwei ungefähr halb so breiten Klammern 140 fixiert wird, die vorzugsweise von entgegengesetzten Seiten in den Klammerraum 41 eingeführt werden. Ansonsten sind die Ausführungsbeispiele gleich ausgestaltet. Die Fig. 36 zeigt die U-förmige Form der Klammer 140, wobei die Länge der freien Enden 142 dergestalt bemessen ist, dass sie bis an den Rand der Stege 39 reichen. Das Einschieben der Klammern 40 oder 140 wird vorteilhafterweise durch ein Einschiessen der Federstahlbügel realisiert.

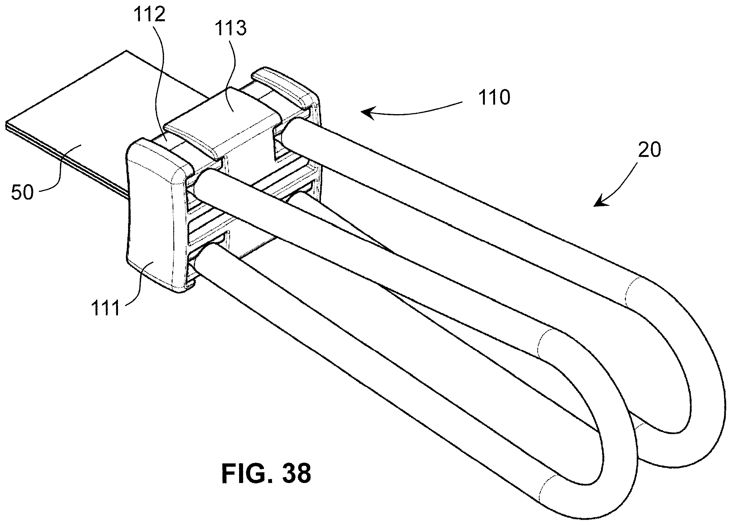

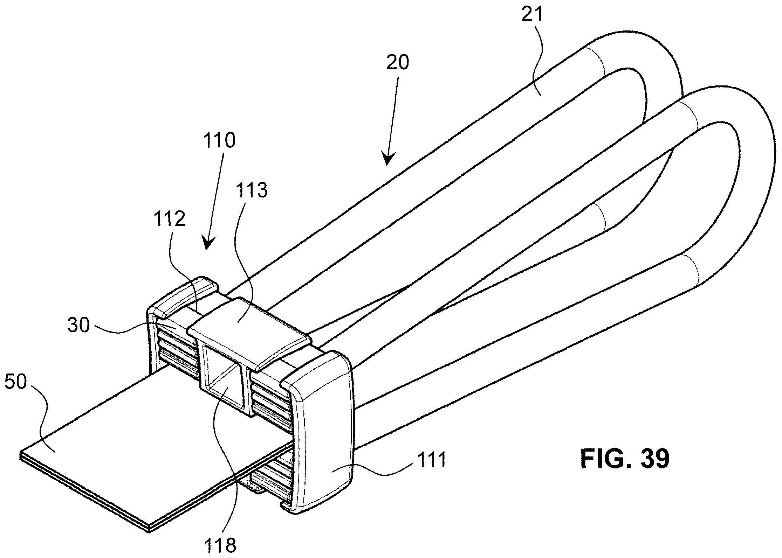

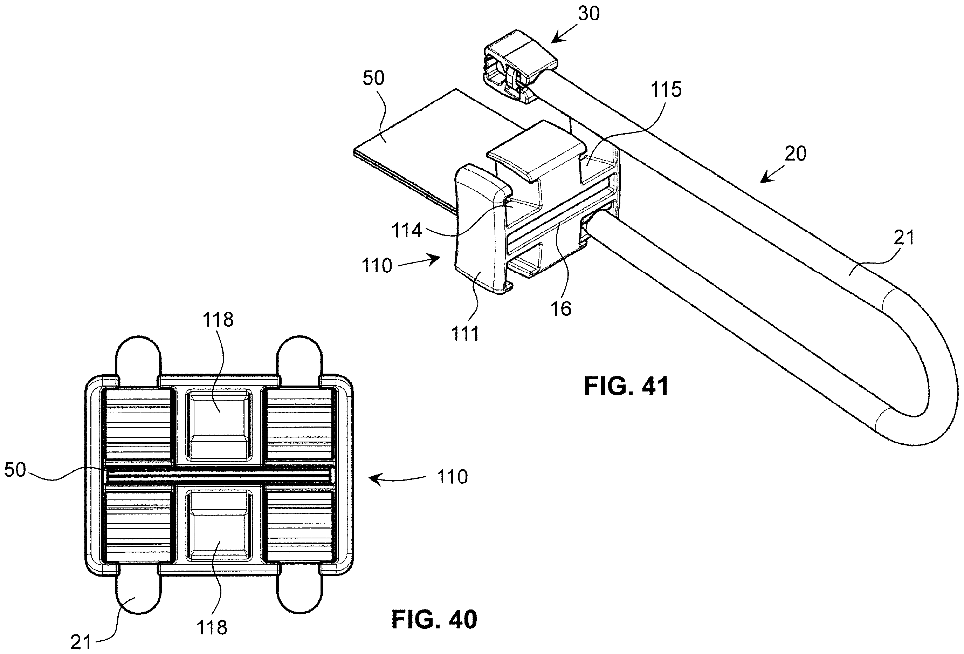

Die Fig. 38 zeigt eine perspektivische Ansicht einer weiteren Ausführungsform eines Seilhakens 110 mit zwei elastischen Elementen 20 und einem flexiblen Bandelement 50. Die Fig. 39 zeigt eine weitere perspektivische Ansicht der Ausführungsform nach Fig. 38 und die Fig. 40 zeigt eine Vorderansicht von der Trampolinmitte her auf den Seilhaken 110 nach Fig. 38. Dazu gehört zur Erläuterung auch die weitere perspektivische Ansicht der Fig. 41 des Seilhakens 110 nach Fig. 38 mit nur einem noch nicht vollständig eingelegten elastischen Element 20.

Die Nummerierung der Bezugszeichen zeigt an, dass die gleichen elastischen Elemente 20 und das gleiche flexible Bandelement 50 eingesetzt werden kann. Der mittige Einlegeschlitz 16 ist in den Dimensionen identisch ausgestaltet und die Aufnahmen 114 weisen, was die untere Rampe 115 angeht, die gleiche Form wie der Seilhaken 10 auf. Der Unterschied liegt darin, dass der Körper 111 im Gegensatz zum umfangmässig geschlossenen Körper 11 an den vier Haken-Einführschlitzen 112 zu den Aufnahmen 114 offen ist und dafür einen Mittenbereich 113 aufweisen, der die innere seitliche Begrenzung für die Seileinführschlitze 112 darstellen. Dafür ist auch der Schlitz 16 für das flexible Bandelement 50 in der Mitte von dem Körper 111 abgedeckt. Jedes einzelne Klemmelement 30 wird einzeln durch seinen Seileinführschlitz 112 an Ort und Stelle gebracht, wobei wie in der Fig. 41 dargestellt, das Gummiseil 21 durch den Seileinführschlitz 112 gedrückt während das Klemmenelement im Bereich des flexiblen Bandelementes 50 ist und dann in die Öffnung gegen die Rampe 115 gezogen wird.

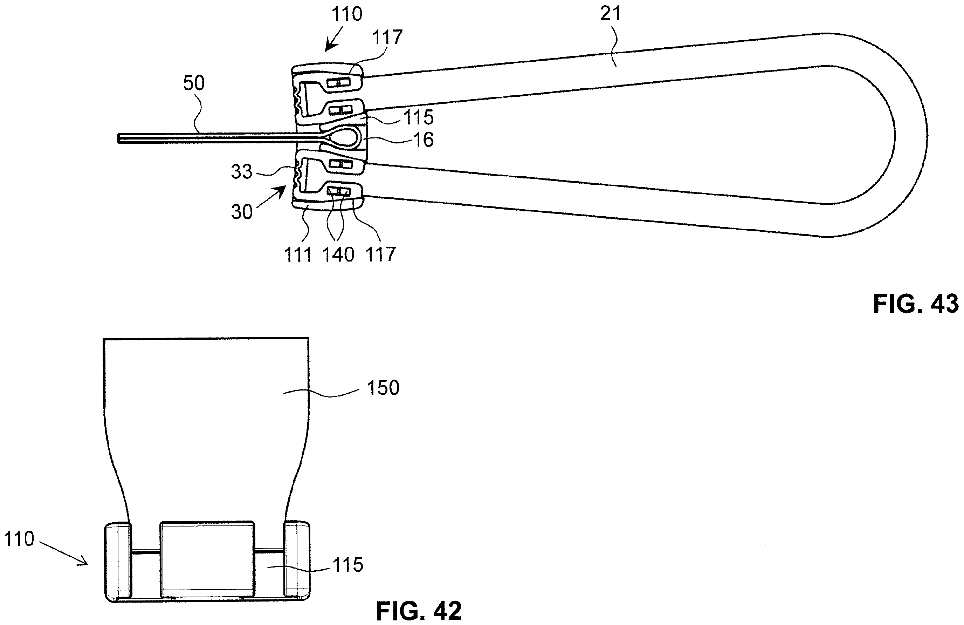

Die Fig. 42 zeigt eine Draufsicht auf einen Seilhaken 110 nach Fig. 38 mit einem anderen flexiblen Bandelement 150; Dieses Bandelement 150 ist an der Trampolinmatte mit einer breiteren Lasche befestigt, während es sich auf den Seilhaken 110 zulaufend verjüngt.

Fig. 43 zeigt eine Querschnittsansicht auf den Seilhaken 110 nach Fig. 38 mit eingesetzten Klemmelementen 30 mit zwei Klammern 140. Der inneren Rampe 115 gegenüber liegt eine äussere Rampe 117, die einer Verdickung des Seilhakenkörpers 111 in Richtung des elastischen Elementes 20 und dem Aussenring des Trampolins entspricht, um den sich verjüngenden Körper des Klemmelementes auf Zug sicher zu halten.

Es ist prinzipiell möglich, in die mittigen Sacklöcher 118 Spoiler 12 einzuschieben, so dass diese Sacklöcher als Spoileraufnahmen ähnlich zu denen mit dem Bezugszeichen 18 fungieren. Die einzusetzenden Spoiler werden dann durch einen Kraftschluss in die Öffnung 118 eingedrückt. Es ist auch möglich, dass die Spoiler mit einem flachen Blatt über den Mittenbereich 113 reichen und sich auf der gegenüberliegenden Seite des Seilhakenkörpers 111 einhaken.

Die Sacklöcher 118 können auch durchgehende Aufnahmen sein, so dass Spoiler 12 ähnlich zu denen aus den Figs. 1 und 2 durch diese hindurch eingeschoben werden können und mit einem durch die dann durchgehende Öffnung hindurchgeführten Rasthaken 13 bzw. 66 fixierbar sind.

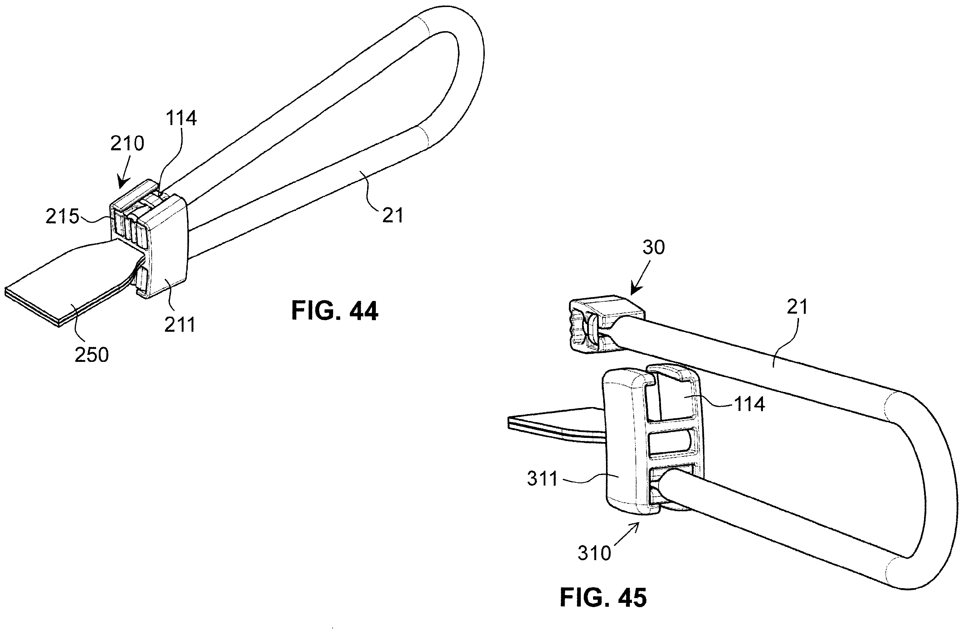

In Abwandlung des Seilhakens 110 können die Rampen 115 und 117 auch quer/liegend angeordnet sein, wie es im Beispiel nach Fig. 44 dargestellt ist.

Die Fig. 44 zeigt eine perspektivische Ansicht eines Beispiels eines Seilhakens 210 mit einem flexiblen Bandelement 250 für nur ein elastisches Element 30; und Fig. 45 zeigt eine perspektivische Ansicht einer anderen Ausführungsform eines Seilhakens 310 mit einem flexiblen Bandelement 250 ebenfalls für nur ein elastisches Element 30.

Bei den Fig. 44 und 45 weist der Seilhakenkörper 211 beziehungsweise 311 nur zwei Aufnahmen 214 beziehungsweise 114 für die beiden Enden des Seilelementes 30 auf. Dabei kann bei der Fig. 45 die Aufnahme gleich wie beim Seilhaken 110 ausgestaltet sein. Bei dem Beispiel der Fig. 44 ist die Aufnahme 214 anders, weil der Seilhaken gegenüber den anderen Ausführungen um 90 Grad gedreht eingelegt wird, also die Verjüngung sich seitlich und nicht von oben nach unten erstreckt. Damit sind auch die Seitenwände des Seilhakenkörpers 211 die Rampen 215. Das flexible Bandelement 250 ist schmaler und verbreitert sich zur Schwungmatte hin. Bei der Fig. 45 entspricht der Seilhakenkörper 311 "einer Hälfte" des Seilhakenkörpers 111; die Aufnahme 114 ist gleich ausgestaltet.

**BEZUGSZEICHENLISTE**

| | | | |
|---|---|---|---|
| 10 | Seilhaken | 51 | Rückhaltestab |
| 11 | Körper des Seilhakens | 55 | Aussenseite des Körpers |
| 12 | Spoiler oder Abrundungen | 56 | Innenseite des Körpers |
| 13 | Rasthaken | 61 | Zentralkörper |
| 14 | Aufnahme | 62 | Spoilerkörper |
| 15 | Rampe | 63 | gerade Rückwand |
| 16 | Einlegeschlitz | 64 | Rastelement |
| 17 | äussere Rampe | 65 | Schlitz |
| 18 | Spoileraufnahme | 66 | Haken |
| 19 | Aufnahmerampe | 110 | Seilhaken |
| 20 | elastisches Element | 111 | Körper |
| 21 | Gummiseil | 112 | Einführschlitz |
| 27 | Schulter | 113 | Mittenbereich |
| 30 | Klemmelement / Krokodil-Klemme | 114 | Aufnahme |
| | | 115 | Rampe |
| 31 | freies Ende | 117 | äussere Rampe |
| 32 | Einführschlitz | 118 | mittiges |
| 33 | Scharnier | | Sackloch/Spoileraufnahme |
| 34 | Klammeraufnahme | 140 | Klammer |
| 35 | Expandierraum | 142 | freies Ende |
| 36 | parallele Aussenwände | 150 | flexibles Bandelement |
| 37 | Verjüngung | 210 | Seilhaken |
| 38 | Vorderfläche | 211 | Seilhakenkörper |
| 39 | Steg | 215 | Innenrampe |
| 40 | Klammer | 250 | flexibles Bandelement |
| 41 | Klammerraum / Schlitz | 310 | Seilhaken |
| 42 | freies Ende | 311 | Seilhakenkörper |
| 50 | flexibles Bandelement | | |

## Patentansprüche

1. Seilhaken (10, 110) zur Befestigung einer Schwungmatte an einem Trampolinrahmen mittels zwei, elastischen Elementen (20) und mindestens einem flexiblen Bandelement (50), wobei der Seilhaken (10) ein Seilhakenkörper (11, 111) mit vier Aufnahmen (14, 114) umfasst, wobei jedes elastische Element (20) zwei freie Enden aufweist, die jeweils ein den Umfang des elastischen Elementes (20) vergrösserndes Klemmelement (30) aufweisen, wobei in die besagten Aufnahmen (14, 114) jeweils ein Klemmelement (30) der zwei elastischen Elemente (20) einsetzbar ist, wobei der Seilhaken (10, 110) über mindestens einen mittig zwischen zwei der Aufnahmen (14, 114) vorgesehenen Aufnahmehohlraum (18, 118) und über ein dem besagten Aufnahmehohlraum (18, 118) zugeordneten Abschlussstück (12) verfügt, welches Abschlussstück (12) in den besagten Aufnahmehohlraum (18, 118) einfügbar ist, **dadurch gekennzeichnet, dass** das Abschlussstück (12) jeweils über eine von dem Seilhakenkörper (11, 111) wegweisende, auf das mittig anzuordnende flexible Bandelement (50) zu gerichtete und dieses flexible Bandelement (50) abdeckende Abdeckungsrundung verfügt.

2. Seilhaken (10, 110) nach Anspruch 1, **dadurch gekennzeichnet, dass** zwei Aufnahmehohlräume (18, 118) im Seilhakenkörper (11, 111) des Seilhakens (10, 110) für zwei Abschlusstücke (12) mit auf das mittig anzuordnende flexible Bandelement (50) zu gerichtete Abdeckungsrundungen vorgesehen sind.

3. Seilhaken nach einem der Ansprüche 1 oder 2, **dadurch gekennzeichnet, dass** der Seilhakenkörper (11) des Seilhakens (10) in Umfangsrichtung quer zur Befestigungsrichtung geschlossen ist.

4. Seilhaken nach Anspruch 3, **dadurch gekennzeichnet, dass** jeweils zwei Aufnahmen (14) mittig von dem Aufnahmehohlraum (18) im Seilhakenkörper (11) vorgesehen und einen gemeinsamen Hohlraum bilden, wobei ein Klemmelement (30) durch den Aufnahmehohlraum (18) hindurchführbar und seitlich in eine der Aufnahmen (18) bewegbar ist.

5. Seilhaken (10, 110, 210, 310) nach einem der vorstehenden Ansprüche 1 bis 4, **dadurch gekennzeichnet, dass** die vier Aufnahmen (14, 114) zwei obere und zwei untere Aufnahmen umfassen und dass mittig zwischen den oberen und unteren Aufnahmen (14, 114) ein Einführschlitz (16) für das flexible Bandelement (50) vorgesehen ist, welches eine Schlaufe mit einem darin einsetzbaren Rückhaltestab (51) bildet, wobei der Einführschlitz (16) auf Seite der Schlaufe sich zum zusammengeführten flexiblen Bandelement (50) hin verjüngt, so dass die Schlaufe mit dem darin einsetzbaren Rückhaltestab (51) im Bereich des Seilhakenkörpers (11, 111) zu liegen kommt, vorteilhafterweise bei Zugausübung im Kraftschluss.

6. Seilhaken (10, 110, 210, 310) nach einem der vorstehenden Ansprüche 1 bis 4, **dadurch gekennzeichnet, dass** die vier Aufnahmen (14, 114) zwei obere und zwei untere Aufnahmen umfassen und dass die oberen und unteren Aufnahmen (14, 114) in Richtung auf die eine Schlaufe bildenden elastischen Elemente (20) hin verjüngt sind, so dass die Klemmelemente (30) im Bereich des Seilhakenkörpers (11, 111) zu liegen kommen, vorteilhafterweise bei Zugausübung im Kraftschluss.

7. Seilhaken (10, 110, 310) nach einem der vorstehenden Ansprüche 1 bis 4, **dadurch gekennzeichnet, dass** die Aufnahmen (14, 114) für jeweils ein Klemmelement (30) in Richtung auf die eine Schlaufe bildenden elastischen Elemente (20) hin verjüngt sind, so dass jede Aufnahme über über zwei gegenüberliegende sich verjüngende Wände verfügt, wobei die sich gegenüberliegenden verjüngenden Wände (15; 115, 117) im Wesentlichen senkrecht zur Ebene des flexiblen Bandelementes (50) ausgerichtet sind.

8. Seilhaken nach einem der Ansprüche 1 bis 7, **dadurch gekennzeichnet, dass** der Aufnahmehohlraum (18) oder die Aufnahmehohlräume (118) durchgehend sind und dass das oder die jeweiligen Abschlussstücke (12) über ein mit dem Seilhakenkörper (11) einen Formschluss herstellende Verbindung (13, 66) verfügen.

9. Befestigungssystem zur Befestigung einer Schwungmatte an einem Trampolinrahmen, wobei die Schwungmatte eine Vielzahl von mit dieser verbundenen flexiblen Bandelementen (50) aufweist, wobei das Befestigungssystem eine Vielzahl von Seilhaken (10, 110) nach einem der Ansprüche 1 bis 8 umfasst, die der Anzahl der flexiblen Bandelemente (50) entspricht.

10. Trampolin mit einer Schwungmatte und einem Trampolinrahmen, wobei das Trampolin weiter ein Befestigungssystem nach Anspruch 9 umfasst, mit welchem die Schwungmatte im Trampolinrahmen eingehängt ist.

11. Verfahren zur Befestigung einer Schwungmatte an einem Trampolinrahmen zur Herstellung eines Trampolins nach Anspruch 10, mit den Verfahrensschritten des,
i) Bereitstellens eines Befestigungssystems nach Anspruch 9, wobei jeder Seilhaken des Befestigungssystems nach Anspruch 8 ausgestaltet ist;
ii) Durchführen eines flexiblen Bandelementes (50) durch einen mittigen Einführschlitz (16) des Seilhakens für ein seitliches Einführen eines Rückhaltestabes (51) in die Schlaufenöffnung des flexiblen Bandelementes (50) und Zurückziehen des flexiblen Bandelementes (50) in den Einführschlitz (16),
iii)Umschlingen eines Abschnitts des Trampolinrahmens mit einem elastischen Element (20),
iv) Durchführen des ersten Klemmelements (30) des ersten elastischen Elementes (20) durch einen oberen Bereich des Aufnahmehohlraums (18) des Seilhakens (10) hindurch und seitliches Verschieben des ersten elastischen Elementes (20) mit dem Klemmelement (30) in die eine seitliche Aufnahme (14),
v) Durchführen des zweiten Klemmelements (30) des ersten elastischen Elementes (20) durch einen unteren Bereich des Aufnahmehohlraums (18) des Seilhakens (10) hindurch und seitliches Verschieben des ersten elastischen Elementes (20) mit dem Klemmelement (30) in die auf der gleichen Seite des Aufnahmehohlraums (18) liegende seitliche Aufnahme (14),
vi) Durchführen des ersten Klemmelements (30) des zweiten elastischen Elementes (20) durch den oberen Bereich des Aufnahmehohlraums (18) des Seilhakens (10) hindurch und seitliches Verschieben des zweiten elastischen Elementes (20) mit dem Klemmelement (30) in die verbleibende gegenüberliegende seitliche Aufnahme (14),
vii) Durchführen des zweiten Klemmelements (30) des zweiten elastischen Elementes (20) durch den unteren Bereich des Aufnahmehohlraums (18) des Seilhakens (10) hindurch und seitliches Verschieben des zweiten elastischen Elementes (20) mit dem Klemmelement (30) in die verbleibende gegenüberliegende seitliche Aufnahme (14),
viii) Einsetzen eines ersten Abschlussstückes (12) von Seiten des flexiblen Bandelements (50) in den oberen Bereich des Aufnahmehohlraum (18) und eines zweiten Abschlussstückes (12) von Seiten des flexiblen Bandelements (50) in den unteren Bereich des Aufnahmehohlraum (18), wobei das Abschlussstück (12) jeweils über eine von dem Seilhakengehäuse (11, 111) wegweisende, von oben und unten auf das mittig anzuordnende flexible Bandelement (50) zu gerichtete und dieses flexible Bandelement (50) von oberhalb und von unterhalb abdeckende Abdeckungsrundung verfügt, und
ix) Einhängen der zwei Klemmelemente (30) der beiden Seilhaken (14) in die zugeordneten Aufnahmeräume (14) des Seilhakens (10) zur Spannung der Schwungmatte im Trampolinrahmen.

## Claims

1. A cable hook (10, 110) fixing a rebound mat to a trampoline frame by means of two elastic elements (20) and at least one flexible strap element (50), wherein the cable hook (10) comprises a cable hook housing (11, 111) with four receivers (14, 114), wherein each elastic element (20) has two free ends, each of which has a clamping element (30) enlarging the periphery of the elastic element (20), wherein a clamping element (30) of the two elastic elements (20) can be inserted in each of said receivers (14, 114), wherein the cable hook (10, 110) has at least one receiving cavity (18, 118) arranged centrally between two of the receivers (14, 114) and a terminating piece (12) assigned to said receiving cavity (18, 118), which terminating piece (12) can be inserted in said receiving cavity (18, 118) and has a cover rounding which points away from the cable hook housing (11, 111) and is oriented towards the flexible strap element (50) to be arranged centrally.

2. The cable hook (10, 110) according to Claim 1, **characterized in that** two receiving cavities (18, 118) are provided in the cable hook body (11, 111) of the cable hook (10, 110) for two terminating pieces (12) with cover roundings oriented towards the flexible strap element (50) to be arranged centrally.

3. The cable hook according to Claim 1 or 2, **characterized in that** the cable hook body (11) of the cable hook (10) is closed in the peripheral direction transversely to the fixing direction.

4. The cable hook according to Claim 3, **characterized in that** in each case two receivers (14) are provided centrally from the receiving cavity (18) in the cable hook body (11) and form a common cavity, wherein a clamping element (30) can be passed through the receiving cavity (18) and moved sideways into one of the receivers (14).

5. The cable hook (10, 110, 210, 310) according to any one of Claims 1 to 4, **characterized in that** the four receivers (14, 114) comprise two upper and two lower receivers (14, 114) and **in that** an insert slot (16) for the flexible strap element (50) is arranged centrally between the upper and lower receivers (14, 114), wherein said strap element forms a loop with a retaining rod (51) which can be placed therein, wherein the insert slot (16) tapers on the loop side towards the flexible strap element (50) which has been brought together, so that the loop with the retaining rod (51) which can be inserted therein comes to lie in the region of the cable hook body (11, 111), advantageously in force fit when tension is exerted.

6. The cable hook (10, 110, 210, 310) according to any one of the preceding Claims 1 to 4, **characterized in that** the four receivers (14, 114) comprises two upper and two lower receivers (14, 114) and **in that** the two upper and two lower receivers (14, 114) are tapered in the direction towards the elastic element (20) forming the loop, so that the clamping elements (30) come to lie in the region of the cable hook body (11, 111), advantageously in force fit when tension is exerted.

7. The cable hook (10, 110, 310) according to any of the preceding Claims 1 to 5, **characterized in that** the tapering walls (15; 115, 117) are oriented substantially perpendicularly to the plane of the flexible strap element (50).

8. The cable hook according to any one of Claims 1 to 7, **characterized in that** the receiving cavity (18) or the receiving cavities (18) are through-openings, and that the terminating pieces (12) have a connection (13, 66) creating a form fit with the cable hook body (11).

9. A fixing system for fixing a rebound mat to a trampoline frame, wherein the rebound mat comprises a plurality of flexible strap elements (50) connected thereto, wherein the fixing system comprises a number of cable hooks (10, 110) according to any one of Claims 1 to 8 corresponding to the number of flexible strap elements (50).

10. A trampoline with a rebound mat and a trampoline frame, wherein the trampoline furthermore comprises a fixing system according to Claim 9, by which the rebound mat is suspended in the trampoline frame.

11. A method for fixing a rebound mat to a trampoline frame with the method steps of:
i) providing a fixing system according to Claim 9, wherein each cable hook is built according to the fixing system of Claim 8,
ii) passing a flexible strap element (50) through a central insert slot (16) in the cable hook for lateral insertion of a retaining rod (51) in the loop opening of the flexible strap element (50) and pulling the flexible strap element (50) back into the insert slot (16),
iii) looping an elastic element (20) around a portion of the trampoline frame,
iv) passing the first clamping element (30) of the first elastic element (20) through an upper section of the receiving cavity (18) of the cable hook (10) and moving the first elastic element (20) with the clamping element (30) sideways into the one lateral receiver (14),
v) passing the second clamping element (30) of the first elastic element (20) through a lower section of the receiving cavity (18) of the cable hook (10) and moving the first elastic element (20) with the clamping element (30) sideways into the lateral receiver (14),
vi) passing the first clamping element (30) of the second elastic element (20) through an upper section of the receiving cavity (18) of the cable hook (10) and moving the second elastic element (20) with the clamping element (30) sideways into the remaining, opposite lateral receiver (14),
vii) passing the second clamping element (30) of the second elastic element (20) through an lower section of the receiving cavity (18) of the cable hook (10) and moving the second elastic element (20) with the clamping element (30) sideways into the remaining, opposite lateral receiver (14),
viii) inserting a first end piece (12) from the side of the flexible strap element (50) into the upper area of the receiving cavity (18) and a second end piece from the side of the flexible strap element (50) into the lower area of the receiving cavity (18), wherein each end piece has a cover rounding pointing away from the cable hook housing (11, 111), oriented from above and below towards the flexible strip element (50) to be arranged centrally and covering from above and below the flexible strip element (50); and
ix) securing the two clamping elements (30) of the two cable hooks (14) in the assigned receiving spaces (14) of the cable hook (10) in order to clamp the rebound mat in the trampoline frame.

## Revendications

1. Crochet de câble (10, 110) pour fixer un mat de trampoline à un cadre de trampoline au moyen de deux éléments élastiques (20) et d'au moins un élément de bande flexible (50), le crochet de câble (10) comprenant un corps de crochet de câble (11, 111) avec quatre logements (14, 114), chaque élément élastique (20) présentant deux extrémités libres qui comportent chacune un élément de serrage (30) augmentant la circonférence de l'élément élastique (20), un élément de serrage (30) des deux éléments élastiques (20) pouvant être inséré dans chacun desdits logements (14, 114), dans lequel le crochet de câble (10, 110) dispose d'au moins une cavité de réception (18, 118) prévue au milieu entre deux des logements (14, 114) et d'une pièce de fermeture (12) associée à ladite cavité de réception (18, 118), dans lequel ladite pièce de fermeture (12) est insérée dans ladite cavité de réception (18, 118), 118), **caractérisé en ce que** la pièce de fermeture (12) dispose respectivement d'un arrondi de recouvrement s'écartant du corps de crochet de câble (11, 111), orienté vers l'élément de bande flexible (50) à disposer au centre et recouvrant cet élément de bande flexible (50).

2. Crochet de câble (10, 110) selon la revendication 1, **caractérisé en ce que** deux cavités de réception (18, 118) sont prévues dans le corps (11, 111) du crochet de câble (10, 110) pour deux pièces de fermeture (12) avec des arrondis de recouvrement orientés vers l'élément de bande flexible (50) à disposer au centre.

3. Crochet de câble selon l'une des revendications 1 ou 2, **caractérisé en ce que** le corps (11) du crochet de câble (10) est fermé dans la direction circonférentielle, transversalement à la direction de fixation.

4. Crochet de câble selon la revendication 3, **caractérisé en ce que** respectivement deux logements (14) sont prévus au centre de la cavité de logement (18) dans le corps du crochet de câble (11) et forment une cavité commune, un élément de serrage (30) pouvant être guidé à travers la cavité de logement (18) et déplacé latéralement dans l'un des logements (18).

5. Crochet de câble (10, 110, 210, 310) selon l'une des revendications 1 à 4 précédentes, **caractérisé en ce que** les quatre logements (14, 114) comprennent deux logements supérieurs et deux logements inférieurs, et **en ce qu'**une fente d'insertion (16) pour l'élément de bande flexible (50) est prévue au milieu entre les logements supérieur et inférieur (14, 114), qui forme une boucle avec une barre de retenue (51) pouvant y être insérée, la fente d'introduction (16) se rétrécissant du côté de la boucle vers l'élément de bande flexible (50) réuni, de sorte que la boucle avec la barre de retenue (51) pouvant y être insérée vient se placer dans la zone du corps du crochet de câble (11, 111), avantageusement lors de l'exercice de la traction en adhérence.

6. Crochet de câble (10, 110, 210, 310) selon l'une quelconque des revendications 1 à 4 précédentes, **caractérisé en ce que** les quatre logements (14, 114) comprennent deux logements supérieurs et deux logements inférieurs et **en ce que** les logements supérieurs et inférieurs (14, 114) sont effilés en direction des éléments élastiques (20) formant une boucle, de sorte que les éléments de serrage (30) viennent se placer dans la zone du corps du crochet de câble (11, 111), avantageusement lors de l'exercice de la traction en adhérence.

7. Crochet de câble (10, 110, 310) selon l'une quelconque des revendications 1 à 4 précédentes, **caractérisé en ce que** les logements (14, 114) pour un élément de serrage (30) respectif sont effilés en direction des éléments élastiques (20) formant une boucle, de sorte que chaque logement dispose de deux parois effilées opposées, les parois effilées opposées (15 ; 115, 117) étant orientées sensiblement perpendiculairement au plan de l'élément de bande flexible (50).

8. Crochet de câble selon l'une des revendications 1 à 7, **caractérisé en ce que** la cavité de réception (18) ou les cavités de réception (118) sont continues et **en ce que** la ou les pièces de fermeture respectives (12) disposent d'une liaison (13, 66) réalisant une liaison par complémentarité de forme avec le corps de crochet de câble (11).

9. Système de fixation pour fixer un mat de trampoline à un cadre de trampoline, le mat de trempoline comportant une pluralité d'éléments de bande flexibles (50) reliés à celui-ci, le système de fixation comprenant une pluralité de crochets de câble (10, 110) selon l'une quelconque des revendications 1 à 8, correspondant au nombre d'éléments de bande flexibles (50).

10. Trampoline comprenant un mat de trampoline et un cadre de trampoline, le trampoline comprenant en outre un système de fixation selon la revendication 9, au moyen duquel le mat de trampoline est accroché dans le cadre de trampoline.

11. Procédé de fixation d'un mat de trampoline à un cadre de trampoline pour la fabrication d'un trampoline selon la revendication 10, comprenant les étapes de procédé de
i) fournir un système de fixation selon la revendication 9, dans lequel chaque crochet de câble du système de fixation est configuré selon la revendication 8 ;
ii) passer un élément de bande flexible (50) à travers une fente d'insertion centrale (16) du crochet de câble pour une insertion latérale d'une barre de retenue (51) dans l'ouverture de boucle de l'élément de bande flexible (50) et le retrait de l'élément de bande flexible (50) dans la fente d'insertion (16),
iii) enrouler un élément élastique (20) autour d'une partie du cadre du trampoline,
iv) faire passer le premier élément de serrage (30) du premier élément élastique (20) à travers une partie supérieure de la cavité de réception (18) du crochet de câble (10) et déplacer latéralement le premier élément élastique (20) avec l'élément de serrage (30) dans l'un des logements latéraux (14),
v) faire passer le deuxième élément de serrage (30) du premier élément élastique (20) à travers une zone inférieure de la cavité de réception (18) du crochet de câble (10) et déplacer latéralement le premier élément élastique (20) avec l'élément de serrage (30) dans le logement latéral (14) situé du même côté de la cavité de réception (18),
vi) faire passer le premier élément de serrage (30) du deuxième élément élastique (20) à travers la partie supérieure de la cavité de réception (18) du crochet de câble (10) et déplacer latéralement le deuxième élément élastique (20) avec l'élément de serrage (30) dans le logement latéral opposé restant (14),
vii) faire passer le deuxième élément de serrage (30) du deuxième élément élastique (20) à travers la zone inférieure de la cavité de réception (18) du crochet de câble (10) et déplacer latéralement le deuxième élément élastique (20) avec l'élément de serrage (30) dans le logement latéral opposé restant (14),
viii) insérer une première pièce de fermeture (12) du côté de l'élément de bande flexible (50) dans la zone supérieure de la cavité de réception (18) et une deuxième pièce de fermeture (12) du côté de l'élément de bande flexible (50) dans la zone inférieure de la cavité de réception (18), la pièce de fermeture (12) disposant respectivement d'un arrondi de recouvrement s'écartant du boîtier du crochet de câble (11, 111), dirigé par le haut et par le bas vers l'élément de bande flexible (50) à disposer au centre et recouvrant cet élément de bande flexible (50) par le haut et par le bas, et
ix) accrocher les deux éléments de serrage (30) des deux crochets de câble (14) dans les espaces de réception (14) associés du crochet de câble (10) pour tendre le mat de trampoline dans le cadre du trampoline.
